(19) Europäisches Patentamt
European Patent Office
Office européen des brevets

(11) EP 4 421 101 A1

# (12) EUROPEAN PATENT APPLICATION

(43) Date of publication:
**28.08.2024 Bulletin 2024/35**

(21) Application number: **24155375.9**

(22) Date of filing: **01.02.2024**

(51) International Patent Classification (IPC):
***C08F 210/06*** *(2006.01)* ***C08F 4/649*** *(2006.01)*
***C08F 2/44*** *(2006.01)*

(52) Cooperative Patent Classification (CPC):
(C-Sets available)
**C08F 210/06;** C08F 2410/01 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.02.2023 JP 2023026461**

(71) Applicant: **Sumitomo Chemical Company, Limited**
**Tokyo 103-6020 (JP)**

(72) Inventors:
- **ITO, Masaki**
  **Ichihara-shi, Chiba, 299-0195 (JP)**
- **SAKAKIBARA, Katsumi**
  **Ichihara-shi, Chiba, 299-0195 (JP)**
- **HASEGAWA, Masayuki**
  **Ichihara-shi, Chiba, 299-0195 (JP)**

(74) Representative: **Global IP Europe Patentanwaltskanzlei**
**Pfarrstraße 14**
**80538 München (DE)**

## (54) METHOD FOR PRODUCING HETEROPHASIC PROPYLENE POLYMERIZATION MATERIAL AND METHOD FOR PRODUCING OLEFIN POLYMER

(57) Provided is a method for producing a heterophasic propylene polymerization material or a method for producing an olefin polymer such that a powdery heterophasic propylene polymerization material or olefin polymer having higher thermal stability or higher bulk density can be obtained.

A method for producing a heterophasic propylene polymerization material, comprising:
a first polymerization step of forming a polymer (I) by polymerizing propylene in presence of a contact product below and an olefin polymerization catalyst obtained by bringing an aluminum compound into contact with an olefin polymerization-use solid catalyst component containing a titanium atom, a magnesium atom, a halogen atom, and an internal electron donor; and
a second polymerization step of forming a polymer (II) by copolymerizing propylene with at least one kind selected from the group consisting of ethylene and $C_{4-12}$ $\alpha$-olefins in presence of the polymer (I),

The contact product can be obtained by bringing an aluminum compound into contact with a specific antioxidant.

FIG. 1

REFERENCE EXAMPLE 6

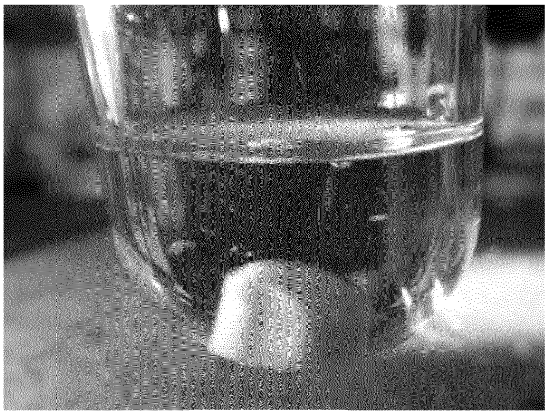

FIG. 1

EP 4 421 101 A1

(52) Cooperative Patent Classification (CPC): (Cont.)

C-Sets
**C08F 110/06, C08F 4/6492;**
**C08F 210/06, C08F 2/001;**
**C08F 210/06, C08F 2/44;**
C08F 110/06, C08F 2500/17;
C08F 210/06, C08F 2500/17, C08F 2500/35,
C08F 2500/27, C08F 2500/15

## Description

### BACKGROUND OF THE INVENTION

### Field of the Invention

The present invention relates to a method for producing a heterophasic propylene polymerization material and a method for producing an olefin polymer.

### Description of the Related Art

The heterophasic propylene polymerization material is produced by a method including a first polymerization step of producing a polymer (I) by polymerizing propylene in the presence of a polymerization catalyst and a second polymerization step of producing a polymer (II) by copolymerizing propylene and an olefin (e.g., JP-A-2010-168546).

### SUMMARY OF THE INVENTION

The heterophasic propylene polymerization material obtained by the above production method is powdery. During continuous production of heterophasic propylene polymerization material in a large-scale factory, it is required to obtain a heterophasic propylene polymerization material having higher thermal stability. In addition, from the viewpoint of transport efficiency, a method has been sought that produces a heterophasic propylene polymerization material having a higher bulk density.

Under such circumstances, the present invention has addressed the problem of providing a method for producing a heterophasic propylene polymerization material or a method for producing an olefin polymer such that a powdery heterophasic propylene polymerization material or olefin polymer having higher thermal stability or higher bulk density can be obtained.

The present inventors have conducted intensive research in view of such a background, and have completed the present invention (inventions 1 and 2). Note that as used herein, unless it is clearly indicated that the present invention means the invention 1 or 2 as in the "present invention (invention 1)" or the "present invention (invention 2)", the "present invention" includes both inventions 1 and 2 described below.

Specifically, the present invention (invention 1) provides the following items.

### Invention 1

[1] A method for producing a heterophasic propylene polymerization material, comprising:

a first polymerization step of forming a polymer (I) by polymerizing propylene in presence of a contact product below and an olefin polymerization catalyst obtained by bringing an aluminum compound into contact with an olefin polymerization-use solid catalyst component containing a titanium atom, a magnesium atom, a halogen atom, and an internal electron donor; and

a second polymerization step of forming a polymer (II) by copolymerizing propylene with at least one kind selected from the group consisting of ethylene and $C_{4-12}$ $\alpha$-olefins in presence of the polymer (I):

the contact product obtained by bringing the aluminum compound into contact with an antioxidant represented by the following formula (1) or formula (2):

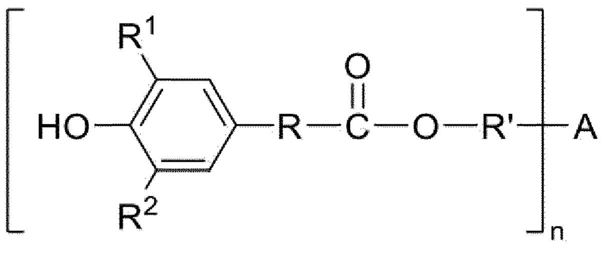

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

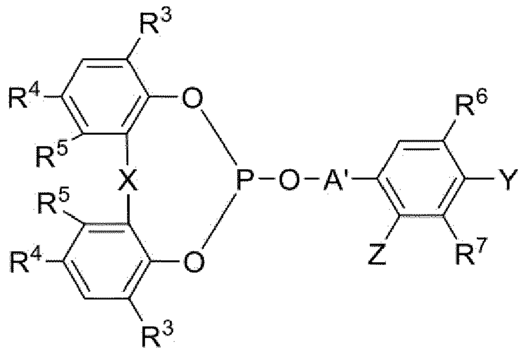

(2)

wherein:

$R^3$, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

[2] The method for producing a heterophasic propylene polymerization material according to [1], wherein the contact product is present in a gas-phase polymerization step in the first polymerization step.
[3] A method for producing an olefin polymer, comprising the step of:

forming an olefin polymer by continuously polymerizing at least one kind selected from the group consisting of ethylene, propylene, and $C_{4-12}$ $\alpha$-olefins
in presence of an olefin polymer ($\alpha$) below:

the olefin polymer ($\alpha$): an olefin polymer formed by polymerizing an olefin in presence of a contact product below and an olefin polymerization catalyst obtained by bringing an olefin polymerization-use solid catalyst component into contact with an aluminum compound, and obtained by polymerizing 10 kg or more and 60 kg or less of the olefin based on 1 g of the olefin polymerization-use solid catalyst component.
the contact product obtained by bringing the aluminum compound into contact with an antioxidant represented by the following formula (1) or formula (2):

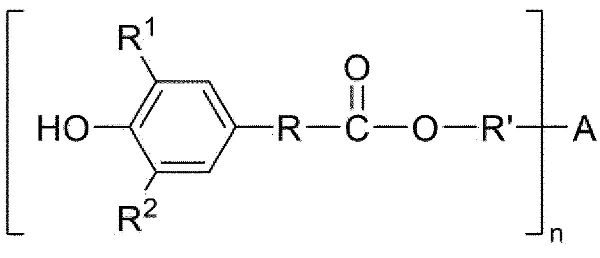

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

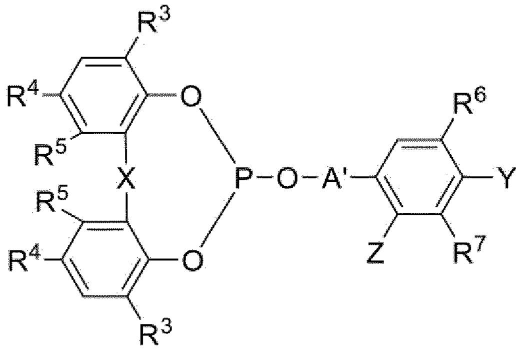

(2)

wherein:

$R^3$, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

[4] The method for producing an olefin polymer according to [3], wherein an amount of the antioxidant represented by formula (1) or formula (2) in the contact product is from 0.0001 to 1 part by weight based on 100 parts by weight of the olefin polymer ($\alpha$).
[5] The method for producing a heterophasic propylene polymerization material according to [1] or [2], wherein the heterophasic propylene polymerization material comprises:

the polymer (I) containing 80 mass% or more of a propylene-derived structural unit and having an intrinsic viscosity of 2.0 dL/g or less; and
the polymer (II) containing a propylene-derived structural unit and a structural unit derived from at least one compound selected from the group consisting of ethylene and $C_{4-12}$ $\alpha$-olefins and having an intrinsic viscosity of from 1.5 to 8.0 dL/g.

[6] The method for producing a heterophasic propylene polymerization material according to [1], [2], or [5], wherein the polymer (I) has a weight ratio of from 40 to 90 mass%, and the polymer (II) has a weight ratio of from 10 to 60 mass%.

Furthermore, the present invention (invention 2) is as follows.

Invention 2

A method for producing a heterophasic propylene polymerization material, comprising:

a first polymerization step of forming a polymer (I) by polymerizing propylene in presence of an olefin polymerization catalyst obtained by bringing an aluminum compound into contact with an olefin polymerization-use solid catalyst component containing a titanium atom, a magnesium atom, a halogen atom, and an internal electron donor; and
a second polymerization step of forming a polymer (II) by copolymerizing propylene with at least one kind selected from the group consisting of ethylene and $C_{4-12}$ $\alpha$-olefins in presence of the polymer (I) and a contact product below:

the contact product obtained by bringing the aluminum compound into contact with an antioxidant represented

by the following formula (1) or formula (2):

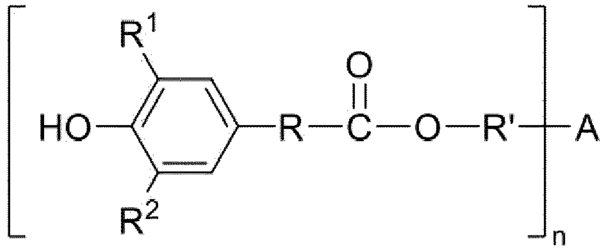

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

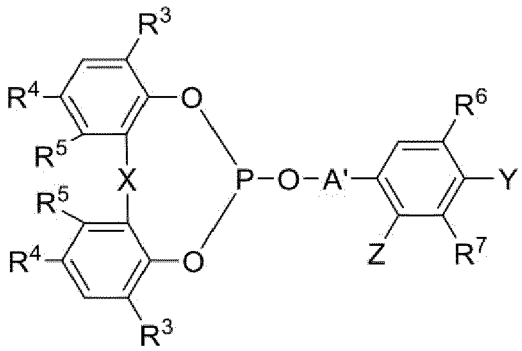

(2)

wherein:

R3, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

The method for producing a heterophasic propylene polymerization material according to [7], wherein the copolymerization is performed after the contact product and the polymer (I) are brought into contact with each other in the second polymerization step.

A method for producing an olefin polymer, comprising the step of:

forming an olefin polymer by continuously polymerizing at least one kind selected from the group consisting of ethylene, propylene, and $C_{4-12}$ $\alpha$-olefins
in presence of an olefin polymer ($\alpha$) below and a contact product below:

the olefin polymer ($\alpha$) obtained by polymerizing 10 kg or more and 60 kg or less of olefin per g of an olefin polymerization-use solid catalyst component.
the contact product obtained by bringing the aluminum compound into contact with an antioxidant represented by the following formula (1) or formula (2):

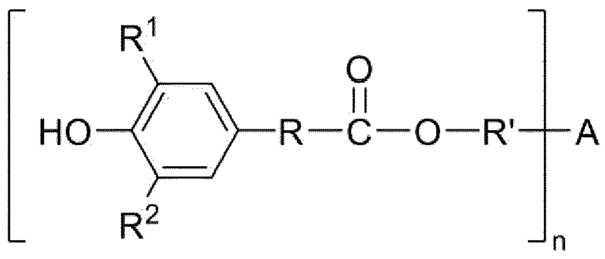

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

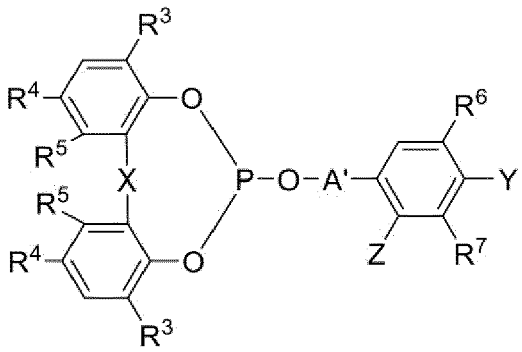

(2)

wherein:

$R^3$, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

The method for producing an olefin polymer according to [9], wherein an amount of the antioxidant represented by formula (1) or formula (2) in the contact product is from 0.0001 to 1 part by weight based on 100 parts by weight of the olefin polymer ($\alpha$).

The method for producing a heterophasic propylene polymerization material according to [7] or [8], wherein the heterophasic propylene polymerization material comprises:

the polymer (I) containing 80 mass% or more of a propylene-derived structural unit and having an intrinsic viscosity of 2.0 dL/g or less; and
the polymer (II) containing a propylene-derived structural unit and a structural unit derived from at least one compound selected from the group consisting of ethylene and $C_{4-12}$ $\alpha$-olefins and having an intrinsic viscosity of from 1.5 to 8.0 dL/g.

The method for producing a heterophasic propylene polymerization material according to [7], [8], or [11], wherein the polymer (I) has a content of from 40 to 90 mass%, and the polymer (II) has a content of from 10 to 60 mass%.

The present invention can produce a powdery heterophasic propylene polymerization material or olefin polymer having higher thermal stability or higher bulk density. That is, the invention 1 exerts an effect such that a powdery heterophasic propylene polymerization material or olefin polymer having higher thermal stability can be obtained, and

can be used for continuous polymer production in a large-scale factory. Furthermore, the invention 2 exerts an effect such that a powdery heterophasic propylene polymerization material or olefin polymer having a higher bulk density can be obtained so as to give a favorable transport efficiency when shipped as powder without pelletization.

BRIEF DESCRIPTION OF THE DRAWINGS

Fig. 1 shows a photograph taken and showing how the inside of a storage container looked in Reference Example 6;
Fig. 2 shows a photograph taken and showing how the inside of a storage container looked in Reference Example 7;
Fig. 3 shows a photograph taken and showing how the inside of a storage container looked in Reference Example 9;
Fig. 4 is a photograph taken and showing the inside of a barrel and a screw of a kneader used in a kneading deterioration test while the photograph was taken from a lateral side with the barrel of the kneader opened to the left and right around the vertical axis at the center and when the polymer (composition) is kneaded, the barrel of the kneader opened to the left and right is closed, the internal temperature is raised to 200°C, the polymer (composition) is then loaded from the upper hopper, the polymer (composition) is kneaded by the screw part, and the torque value of the polymer (composition) is measured at the same time; and
Fig. 5 shows the results of a kneading deterioration test as obtained in Examples (Examples X1-X7 and Comparative Examples C4 and C6).

DETAILED DESCRIPTION OF THE PREFERRED EMBODIMENTS

Heterophasic propylene polymerization material

The heterophasic propylene polymerization material obtained by the method for producing a heterophasic propylene polymerization material according to the present invention may be produced by performing the first polymerization step of forming the polymer (I) and the second polymerization step of forming the polymer (II). The polymerization catalyst, the polymerization method, and the polymerization system adopted in these polymerization steps will be exemplified and described below.

The heterophasic propylene polymerization material preferably comprises:

the polymer (I) containing 80 mass% or more of a propylene-derived structural unit and having an intrinsic viscosity of 2.0 dL/g or less; and
the polymer (II) containing a propylene-derived structural unit and a structural unit derived from at least one compound selected from the group consisting of ethylene and $C_{4-12}$ $\alpha$-olefins and having an intrinsic viscosity of from 1.5 to 8.0 dL/g.

More preferably, the content of the polymer (I) is from 40 to 90 mass%, and the content of the polymer (II) is from 10 to 60 mass%.

The polymer (I) may be, for example, a propylene homopolymer or may contain a structural unit derived from a monomer other than propylene. When the polymer (I) contains a structural unit derived from a monomer other than propylene, the content thereof may be, for example, 0.01 mass% or more and less than 20 mass% based on the total mass of the polymer (I).

Examples of the monomer other than propylene include ethylene or an $\alpha$-olefin having 4 or more carbon atoms. Among them, at least one compound selected from the group consisting of ethylene and $C_{4-10}$ $\alpha$-olefins is preferable, at least one compound selected from the group consisting of ethylene, 1-butene, 1-hexene, and 1-octene is more preferable, and at least one compound selected from the group consisting of ethylene and 1-butene is still more preferable.

Examples of the polymer containing a structural unit derived from a monomer other than propylene include a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, or a propylene-ethylene-1-octene copolymer.

From the viewpoint of the dimensional stability of molding, the polymer (I) is preferably a propylene homopolymer, a propylene-ethylene copolymer, a propylene-1-butene copolymer, or a propylene-ethylene-1-butene copolymer, and more preferably a propylene homopolymer.

The content of polymer (I) is preferably from 40 to 90 mass% and more preferably from 45 to 90 mass% based on the total mass of the heterophasic propylene polymerization material.

The polymer (II) preferably contains 20 mass% or more of a structural unit derived from at least one $\alpha$-olefin selected from the group consisting of ethylene and $C_{4-12}$ $\alpha$-olefins, and preferably contains a propylene-derived structural

unit.

In the polymer (II), the structural unit derived from at least one α-olefin selected from the group consisting of ethylene and $C_{4-12}$ α-olefins may have a content of from 25 to 60 mass% or from 30 to 60 mass%.

The at least one α-olefin selected from ethylene and $C_{4-12}$ α-olefins in the polymer (II) is preferably at least one compound selected from the group consisting of ethylene and $C_{4-10}$ α-olefins, more preferably at least one compound selected from the group consisting of ethylene, 1-butene, 1-hexene, 1-octene, and 1-decene, and still more preferably at least one compound selected from the group consisting of ethylene and 1-butene.

Examples of the polymer (II) include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, or a propylene-1-decene copolymer. Among them, a propylene-ethylene copolymer, a propylene-1-butene copolymer, or a propylene-ethylene-1-butene copolymer is preferable, and a propylene-ethylene copolymer is more preferable.

The content of polymer (II) is preferably from 10 to 60 mass% and more preferably from 10 to 55 mass% based on the total mass of the heterophasic propylene polymerization material.

The content of cold xylene-insoluble (CXIS) component in the heterophasic propylene polymerization material is preferably from 40 to 99 mass% and more preferably from 45 to 90 mass% based on the total mass of the heterophasic propylene polymerization material.

The content of cold xylene-soluble (CXS) component in the heterophasic propylene polymerization material is preferably from 1 to 60 mass% and more preferably from 10 to 55 mass% based on the total mass of the heterophasic propylene polymerization material.

In this embodiment, the CXIS component in the heterophasic propylene polymerization material is mainly composed of the polymer (I), and the CXS component in the heterophasic propylene polymerization material is mainly composed of the polymer (II).

Examples of the heterophasic propylene polymerization material include a (propylene)-(propylene-ethylene) polymerization material, (propylene)-(propylene-ethylene-1-butene) polymerization material, (propylene)-(propylene-ethylene-1-hexene) polymerization material, (propylene)-(propylene-ethylene-1-octene) polymerization material, (propylene)-(propylene-1-butene) polymerization material, (propylene)-(propylene-1-hexene) polymerization material, (propylene)-(propylene-1-octene) polymerization material, (propylene)-(propylene-1-decene) polymerization material, (propylene-ethylene)-(propylene-ethylene) polymerization material, (propylene-ethylene)-(propylene-ethylene-1-butene) polymerization material, (propylene-ethylene)-(propylene-ethylene-1-hexene) polymerization material, (propylene-ethylene)-(propylene-ethylene-1-octene) polymerization material, (propylene-ethylene)-(propylene-ethylene-1-decene) polymerization material, (propylene-ethylene)-(propylene-1-butene) polymerization material, (propylene-ethylene)-(propylene-1-hexene) polymerization material, (propylene-ethylene)-(propylene-1-octene) polymerization material, (propylene-ethylene)-(propylene-1-decene) polymerization material, (propylene-1-butene)-(propylene-ethylene) polymerization material, (propylene-1-butene)-(propylene-ethylene-1-butene) polymerization material, (propylene-1-butene)-(propylene-ethylene-1-hexene) polymerization material, (propylene-1-butene)-(propylene-ethylene-1-octene) polymerization material, (propylene-1-butene)-(propylene-ethylene-1-decene) polymerization material, (propylene-1-butene)-(propylene-1-butene) polymerization material, (propylene-1-butene)-(propylene-1-hexene) polymerization material, (propylene-1-butene)-(propylene-1-octene) polymerization material, (propylene-1-butene)-(propylene-1-decene) polymerization material, (propylene-1-hexene)-(propylene-1-hexene) polymerization material, (propylene-1-hexene)-(propylene-1-octene) polymerization material, (propylene-1-hexene)-(propylene-1-decene) polymerization material, (propylene-1-octene)-(propylene-1-octene) polymerization material, or (propylene-1-octene)-(propylene-1-decene) polymerization material.

Here, the term "(propylene)-(propylene-ethylene) polymerization material" means a "heterophasic propylene polymerization material in which the polymer (I) is a propylene homopolymer and the polymer (II) is a propylene-ethylene copolymer". The same applies to other analogous expressions.

The heterophasic propylene polymerization material is preferably a (propylene)-(propylene-ethylene) polymerization material, a (propylene)-(propylene-ethylene-1-butene) polymerization material, a (propylene-ethylene)-(propylene-ethylene) polymerization material, a (propylene-ethylene)-(propylene-ethylene-1-butene) polymerization material, or a (propylene-1-butene)-(propylene-1-butene) polymerization material, and more preferably a (propylene)-(propylene-ethylene) polymerization material.

The intrinsic viscosity ([η]I) of the polymer (I) is preferably from 0.10 to 2.00 dL/g, more preferably from 0.50 to 1.50 dL/g, and still more preferably from 0.70 to 1.40 dL/g.

The intrinsic viscosity ([η]II) of the polymer (II) is preferably from 1.50 to 8.00 dL/g and more preferably from 2.00 to 8.00 dL/g.

The ratio ([η]II/[η]I) of the intrinsic viscosity ([η]II) of the polymer (II) to the intrinsic viscosity ([η]I) of the polymer (I) is preferably from 1 to 20, more preferably from 1 to 10, and still more preferably from 1 to 9.

Examples of the method for measuring the intrinsic viscosity ([η]I) of the polymer (I) include a method in which

the polymer (I) is formed and the intrinsic viscosity of the polymer is then measured.

The intrinsic viscosity ([η]II) of the polymer (II) can be calculated by the following formula (6) using, for example, the intrinsic viscosity ([η]whole) of the heterophasic propylene polymerization material, the intrinsic viscosity ([η]I) of the polymer (I), and the contents of the polymer (II) and the polymer (I).

$$[\eta]II=([\eta]whole-[\eta]I\times XI)/XII \quad ... (6)$$

where [η]whole: intrinsic viscosity (dL/g) of heterophasic propylene polymerization material; [η]I: intrinsic viscosity (dL/g) of polymer (I);
XI: ratio between the mass of polymer (I) and the total mass of heterophasic propylene polymerization material (mass of polymer (I)/mass of heterophasic propylene polymerization material); and
XII: ratio between the mass of polymer (II) and the total mass of heterophasic propylene polymerization material (mass of polymer (II)/mass of heterophasic propylene polymerization material).

Here, XII was calculated by measuring the heat of fusion of the heterophasic propylene polymerization material while using the equation below. A sample (about 5 mg) of the heterophasic propylene polymerization material was filled in an aluminum pan, and placed in a differential scanning calorimeter, a DSC 8500 model apparatus (manufactured by PerkinElmer, Inc.). The temperature was raised to 230°C, and the sample was kept at 230°C for 5 minutes; and the temperature was lowered to 0°C at a rate of 5°C/min, and the sample was kept at 0°C for 5 minutes. The temperature was corrected by setting the melting point of indium to 156.6°C. The heat of fusion (unit: J/g) was calculated from the fusion peak area in the melting curve, and XII was then determined using the following formula:

$$XII = (1 - (\text{heat of fusion of heterophasic propylene polymerization material})/105) \times 100.$$

In addition, XII may be obtained by measuring the heat of crystal fusion of the whole of the polymer (I) and the heterophasic propylene polymerization material and by calculation using the following formula. Here, the heat of crystal fusion was measured by differential scanning calorimetry (DSC).

$$XII = 1 - (\Delta Hf)T/(\Delta Hf)P$$

where (ΔHf)T is the fusion heat (J/g) of the whole heterophasic propylene polymerization material; and
(ΔHf)P is the fusion heat (J/g) of polymer (I).

Note that XI and XII may be calculated from the mass balance during polymerization.

The intrinsic viscosity ([η]CXIS) of the CXIS component is preferably from 0.10 to 2.00 dL/g, more preferably from 0.50 to 1.50 dL/g, and still more preferably from 0.70 to 1.40 dL/g.

The intrinsic viscosity ([η]CXS) of the CXS component is preferably from 1.50 to 8.00 dL/g and more preferably from 2.00 to 8.00 dL/g.

The ratio ([η]CXS/[η]CXIS) of the intrinsic viscosity ([η]CXS) of the CXS component to the intrinsic viscosity ([η]CXIS) of the CXIS component is preferably from 1 to 20, more preferably from 1 to 10, and still more preferably from 1 to 9.

The polymer (I) has an isotactic pentad fraction (also referred to as [mmmm] fraction) of preferably 0.950 or higher and more preferably 0.970 or higher from the viewpoint of the rigidity and dimensional stability of molding formed of the resin composition. The isotactic pentad fraction of the polymer (I) may be, for example, 1.000 or less.

The isotactic pentad fraction means an isotactic fraction in a pentad unit. That is, the isotactic pentad fraction indicates the content ratio of a structure in which five consecutive propylene-derived structural units, namely a pentad unit, are bonded in the meso configuration. Note that when the target component is a copolymer, the term refers to a value measured for a chain of propylene-derived structural units.

The isotactic pentad fraction is herein a value measured using a $^{13}C$-NMR spectrum. Specifically, the ratio of the area of the mmmm peak to the area of all the absorption peaks of the methyl carbon region as obtained by $^{13}C$-NMR spectrum was defined as the isotactic pentad fraction. The isotactic pentad fraction was measured according to a method using a $^{13}C$-NMR spectrum as described in Macromolecules, 6, 925 (1973) by A. Zambelli *et al.* Each absorption peak obtained by $^{13}C$-NMR spectrum was assigned based on the description of Macromolecules, 8, 687 (1975).

As used herein, the melt flow rate of the polymer (I) at a temperature of 230°C under a load of 2.16 kgf refers to a value measured at 230°C under a load of 2.16 kgf in accordance with JIS K6758. Meanwhile, the melt flow rate may be hereinafter referred to as MFR. The melt flow rate of the polymer (I) is preferably 3 g/10 min or more, and more preferably 10 g/10 min to 500 g/10 min from the viewpoint of molding processability of the resin composition.
The melt flow rate of the polymer (II) at a temperature of 230°C under a load of 2.16 kgf refers to a value measured at 230°C under a load of 2.16 kgf in accordance with JIS K6758. The melt flow rate of the polymer (II) is preferably 0.01 g/10 min or more, and more preferably 0.02 g/10 min to 20 g/10 min from the viewpoint of molding processability of the resin composition.

<To measure intrinsic viscosity [η] (unit: dL/g)>

A tetralin solution (with concentrations of 0.1 g/dL, 0.2 g/dL, and 0.5 g/dL) containing a propylene-based polymer or a heterophasic propylene polymerization material was prepared. Thereafter, the reduced viscosity of the tetralin solution was measured at 135°C using an Ubbelohdetype viscometer. Each intrinsic viscosity was then determined by the calculation method described in page 491 of "Polymer Solution, Polymer Experimentation 11" (published by KYORITSU SHUPPAN CO., LTD., 1982), that is, the extrapolation method in which the reduced viscosity is plotted with respect to the concentration and the concentration is extrapolated to zero.

<Content (unit: mass%) of ethylene structural unit in heterophasic propylene polymerization material>

In accordance with IR spectrum measurement described on page 619 of Polymer Analysis Handbook (1995, published by KINOKUNIYA COMPANY LTD.), the content of ethylene structural unit in the heterophasic propylene polymerization material as obtained by an IR spectrum method was determined. The content of ethylene structural unit in the heterophasic propylene polymerization material was divided by the content of the polymer (II) in the heterophasic propylene polymerization material to determine the content of ethylene structural unit in the polymer (II). Note that the proportion of polymer (II) in the heterophasic propylene polymerization material was determined by a method described later.
Also note that the term "ethylene structural unit" as used herein means a structural unit derived from ethylene.
In the production of the polymer (I) and the polymer (II), it is possible to use, for instance, a fossil resource-derived monomer (e.g., ethylene, propylene, 1-butene, 1-hexene), a plant-derived monomer (e.g., ethylene, propylene, 1-butene, 1-hexene), or a chemical recycled monomer (e.g., ethylene, propylene, 1-butene, 1-hexene). Two or more kinds of them may be used in combination. Specific examples of the combination of monomers include fossil resource-derived ethylene/plant-derived ethylene/chemical recycled ethylene, fossil resource-derived ethylene/plant-derived ethylene/chemical recycled ethylene/fossil resource-derived 1-butene/plant-derived 1-butene/chemical recycled 1-butene, fossil resource-derived ethylene/plant-derived ethylene/chemical recycled ethylene/fossil resource-derived 1-hexene/plant-derived 1-hexene/chemical recycled 1-hexene, fossil resource-derived propylene/plant-derived propylene/chemical recycled propylene, fossil resource-derived propylene/plant-derived propylene/chemical recycled propylene/fossil resource-derived ethylene/plant-derived ethylene/chemical recycled ethylene, or fossil resource-derived propylene/plant-derived propylene/chemical recycled propylene/fossil resource-derived 1-butene/plant-derived 1-butene/chemical recycled 1-butene.
The fossil resource-derived monomer is derived from carbon as an underground resource such as petroleum, coal, or natural gas, and generally contains little carbon 14 ($^{14}C$). Examples of the method for producing a fossil resource-derived monomer include a known method such as a method for producing an olefin by cracking of, for instance, petroleum-derived naphtha or ethane and/or dehydrogenation of, for instance, ethane or propane.
The plant-derived monomer is derived from carbon circulating on the ground surface as plants/animals, and generally contains a certain proportion of carbon 14 ($^{14}C$). Examples of the method for producing a plant-derived monomer include a known method such as a method for cracking of, for instance, bionaphtha, vegetable oil, or animal oil, dehydrogenation of, for instance, biopropane, or separation and dehydration of an alcohol from a product obtained by fermenting, for instance, sugar extracted from a plant raw material such as sugar cane or corn (e.g., JP-A-2010-511634, JP-A-2011-506628, JP-A-2013-503647), or a method of subjecting n-butane and ethylene obtained from plant-derived ethanol to a metathesis reaction (e.g., WO 2007/055361).
The chemical recycled monomer is derived from carbon generated by decomposition or combustion of waste, and the content of carbon 14 ($^{14}C$) varies depending on the waste. Examples of the method for producing a chemical recycled monomer include a known method such as a method of thermally decomposing waste plastic (e.g., JP-A-2017-512246), a method of cracking, for instance, waste vegetable oil or waste animal oil (e.g., JP-A-2018-522087), or a method of performing a gasification/alcohol conversion/dehydration reaction of waste such as garbage, biomass waste, food waste, waste oil, waste wood, paper waste, or waste plastic (e.g., JP-A-2019-167424, WO 2021/006245).
When two or more kinds of fossil resource-derived olefins, plant-derived olefins, and/or chemical recycled

olefins are used, individually produced olefins may be mixed and used in a combination of fossil resource-derived olefin/plant-derived olefin, fossil resource-derived olefin/chemical recycled olefin, plant-derived olefin/chemical recycled olefin, or fossil resource-derived olefin/plant-derived olefin/chemical recycled olefin. In addition, it is possible to use, as a raw material/production intermediate of the olefin production process, a mixture produced as a combination of the above-mentioned olefins by using a combination of fossil resource-derived compound/plant-derived compound, fossil resource-derived compound/chemical recycled compound, plant-derived compound/chemical recycled compound, or fossil resource-derived compound/plant-derived compound/chemical recycled compound.

The carbon 14 ($^{14}C$) concentration of the polymer (I) or the polymer (II) is preferably 0.2 pMC (%) or higher, more preferably 0.5 pMC (%) or higher, still more preferably 1 pMC (%) or higher, still more preferably 5 pMC (%) or higher, and particularly preferably 10 pMC (%) or higher from the viewpoint of reducing the environmental load. From the viewpoint of cost, the concentration is preferably 99 pMC (%) or less, more preferably 95 pMC (%) or less, still more preferably 90 pMC (%) or less, still more preferably 70 pMC (%) or less, and particularly preferably 50 pMC (%) or less.

The carbon 14 ($^{14}C$) concentration of the polymer (I) or the polymer (II) can be adjusted by changing the ratio among the fossil resource-derived olefin, the plant-derived olefin, and the chemical recycled olefin used for producing the polyolefin resin.

Olefin polymerization-use solid catalyst component

The heterophasic propylene polymerization material or the olefin polymer in the present invention can be preferably produced by the following production method comprising the steps of:

bringing a component (A), a component (B), and a component (C) into contact with one another to obtain an olefin polymerization catalyst; and
polymerizing an olefin in presence of the olefin polymerization catalyst to produce a heterophasic propylene polymerization material or an olefin polymer, wherein
the component (A) is an olefin polymerization-use solid catalyst component containing a titanium atom, a magnesium atom, a halogen atom, and an internal electron donor;
the component (B) is an aluminum compound; and
the component (C) is a silicon compound represented by the following formula (i) or (ii):

$$R^{8'}{}_hSi(OR^9)_{4-h} \qquad (i)$$

where $R^{8'}$ is a $C_{1-20}$ hydrocarbyl group or a hydrogen atom, $R^9$ is a $C_{1-20}$ hydrocarbyl group, h is an integer satisfying $0 \leq h < 4$, and when a plurality of one or both of $R^{8'}$ and $R^9$ are present, the plurality of $R^{8'}$ or $R^9$ may be same or different; or

$$R^{10}{}_2Si(NR^{11}R^{12})_2 \qquad (ii)$$

where $R^{10}$ is a $C_{1-20}$ hydrocarbyl group or a hydrogen atom and $R^{11}$ and $R^{12}$ are each a $C_{1-12}$ hydrocarbyl group or a hydrogen atom.

As used herein, the wording "olefin polymerization-use solid catalyst component" means to be an olefin polymerization catalyst that is preferably present as a solid content at least in toluene and is produced by using, in combination, an olefin polymerization catalyst aid such as an aluminum compound.

Part or all of the titanium atoms in the olefin polymerization-use solid catalyst component are derived from a titanium halide compound. Part or all of the halogen atoms in the olefin polymerization-use solid catalyst component are derived from a titanium halide compound.

Part or all of the magnesium atoms in the olefin polymerization-use solid catalyst component are derived from a magnesium compound. The magnesium compound may be a magnesium atom-containing compound, and specific examples thereof include compounds represented by the following formulas (iii) to (v) :

$$MgR^{13}{}_kX_{2-k} \cdots \qquad (iii)$$

$$Mg(OR^{13})_mX_{2-m} \cdots \qquad (iv)$$

$$MgX_2 \cdot nR^{13}OH \ldots \qquad (v)$$

where k is a number satisfying $0 \leq k \leq 2$; m is a number satisfying $0 < m \leq 2$; n is a number satisfying $0 \leq n \leq 3$; $R^{13}$ is

a $C_{1-20}$ hydrocarbyl group; and X is a halogen atom.

Examples of X in the above formulas (iii) to (v) include a chlorine atom, a bromine atom, an iodine atom, or a fluorine atom. Here, a chlorine atom is preferable. Each X may be the same or different.

Specific examples of the magnesium compound represented by any of the formulas (iii) to (v) include magnesium dialkoxide or magnesium halide.

The magnesium halide used may be a commercially available magnesium halide as it is. A precipitate generated by dropping a solution, which is obtained by dissolving a commercially available magnesium halide in alcohol, into a hydrocarbon liquid may be separated from the liquid and used. The magnesium halide may be produced based on the method described in US-B-6,825,146, WO-A-1998/044009, WO-A-2003/000754, WO-A-2003/000757, or WO-A-2003/085006.

Examples of the method for producing magnesium dialkoxide include a method in which metallic magnesium and an alcohol are brought into contact with each other in the presence of a catalyst (e.g., JP-A-04-368391, JP-A-03-74341, JP-A-08-73388, WO-A-2013/058193). Examples of the alcohol include methanol, ethanol, propanol, butanol, or octanol. Examples of the catalyst include halogen (e.g., iodine, chlorine, bromine); or a magnesium halide (e.g., magnesium iodide, magnesium chloride). Preferred is iodine.

The magnesium compound may be supported on a carrier. Examples of the carrier include a porous inorganic oxide (e.g., SiO2, Al2O3, MgO, TiO2, ZrO2); or an organic porous polymer (e.g., polystyrene, a styrene-divinylbenzene copolymer, a styrene-ethylene glycol dimethacrylic acid copolymer, polymethyl acrylate, polyethyl acrylate, a methyl acrylate-divinylbenzene copolymer, polymethyl methacrylate, a methyl methacrylate-divinylbenzene copolymer, polyacrylonitrile, an acrylonitriledivinylbenzene copolymer, polyvinyl chloride, polyethylene, polypropylene). Among them, a porous inorganic oxide is preferable, and $SiO_2$ is more preferable.

The carrier is preferably porous from the viewpoint of effectively immobilizing a magnesium compound on the carrier. More preferred is a porous carrier in which the total pore volume of pores having a pore radius of 10 to 780 nm determined by a mercury intrusion method according to the standard ISO 15901-1: 2005 is 0.2 cm3/g or more. Still more preferred is a porous carrier with the total pore volume of 0.3 cm3/g or more. In addition, preferred is a porous carrier in which the total pore volume of pores having a pore radius of 10 to 780 nm is 150 or more based on the total pore volume of pores having a pore radius of 2 to 100 um. More preferred is a porous carrier with the total pore volume of 20% or more.

The magnesium compound may be used singly or two or more kinds thereof may be used in combination. The magnesium compound may be brought into contact with a titanium halide compound solution in the form of a magnesium compound slurry containing a magnesium compound and a solvent as long as the effects of the present invention are exerted, or may be brought into contact in a solvent-free form.

Part or all of the magnesium atoms in the olefin polymerization-use solid catalyst component are derived from a magnesium compound. In addition, part of the halogen atoms in the olefin polymerization-use solid catalyst component is derived from a magnesium compound.

The internal electron donor means an organic compound capable of donating an electron pair to one or more metal atoms contained in the olefin polymerization-use solid catalyst component. Specific examples thereof include a monoester compound, a dicarboxylic acid ester compound, a diol diester compound, a β-alkoxy ester compound, or a diether compound.

In addition, the examples also include the internal electron donor described in JP-A-2011-246699.

Among them, a dicarboxylic acid ester compound, a β-alkoxy ester compound, or a diether compound is preferable. The internal electron donor may be used singly or two or more kinds thereof may be used in combination.

The olefin polymerization-use solid catalyst component may be produced by the following method for producing an olefin polymerization-use solid catalyst component, the method comprising:
step (I) of bringing a titanium halide compound into contact with a magnesium compound to obtain a slurry containing a solid product.

Preferably, in step (I) of the method for producing an olefin polymerization-use solid catalyst component, the magnesium compound is added to the titanium halide compound-containing solution; the internal electron donor is at least one compound selected from the group consisting of a monoester compound, a dicarboxylic acid ester compound, a diol diester compound, a β-alkoxy ester compound, and a diether compound; and the magnesium compound is magnesium dialkoxide.

Olefin polymerization catalyst

In one embodiment, the olefin polymerization catalyst may be produced by bringing the olefin polymerization-use solid catalyst component into contact with an aluminum compound, for example, by a known procedure. Also, in another embodiment, the olefin polymerization catalyst may be produced by bringing the olefin polymerization-use solid catalyst component into contact with an aluminum compound and an external electron donor.

As a result, in one embodiment, the olefin polymerization catalyst contains the olefin polymerization-use solid catalyst component and an aluminum compound. Alternatively, in another embodiment, the olefin polymerization catalyst contains the olefin polymerization-use solid catalyst component, an aluminum compound, and an external electron donor.

The aluminum compound is a compound having one or more carbon-aluminum bonds or halogen-aluminum bonds, and specific examples thereof include the compound described in JP H10-A-212319 or aluminum trihalide ($AlX_3$: X is halogen). Among them, the aluminum compound is preferably trialkylaluminum, dialkylaluminum halide, alkylaluminum dihalide, aluminum trihalide, a mixture of trialkylaluminum and dialkylaluminum halide, or alkylalumoxane, and more preferably triethylaluminum.

Examples of the external electron donor can include each compound described in JP-B-2950168, JP-A-2006-96936, JP-A-2009-173870, or JP-A-2010-168545. Among them, an oxygen-containing compound or a nitrogen-containing compound is preferable. Examples of the oxygen-containing compound include an alkoxysilicon compound, ether, ester, or ketone. Among them, an alkoxysilicon compound or ether is preferable. Examples of the nitrogen-containing compound include aminosilicon, amine, imine, amide, imide, or cyan. Among them, an aminosilicon compound is preferable.

The alkoxysilicon compound or the aminosilicon compound as the external electron donor is preferably a silicon compound represented by the following formula such that

the component (C) is a silicon compound represented by the following formula (i) or (ii):

$$R^{8'}{}_{h}Si(OR^9)_{4-h} \qquad (i)$$

where $R^{8'}$ is a $C_{1-20}$ hydrocarbyl group or a hydrogen atom, $R^9$ is a $C_{1-20}$ hydrocarbyl group, h is an integer satisfying $0 \leq h < 4$, and when a plurality of one or both of $R^{8'}$ and $R^9$ are present, the plurality of $R^{8'}$ or $R^9$ may be same or different; or

$$R^{10}{}_2Si(NR^{11}R^{12})_2 \qquad (ii)$$

where $R^{10}$ is a $C_{1-20}$ hydrocarbyl group or a hydrogen atom and $R^{11}$ and $R^{12}$ are each a $C_{1-12}$ hydrocarbyl group or a hydrogen atom.

Examples of the hydrocarbyl group of R8' or R9 in the above formula (i) include an alkyl group, an aralkyl group, an aryl group, or an alkenyl group. Examples of the alkyl group of R8' or R9 include a linear alkyl group (e.g., a methyl, ethyl, n-propyl, n-butyl, n-pentyl, n-hexyl, n-heptyl, or n-octyl group); a branched alkyl group (e.g., an iso-propyl, iso-butyl, tert-butyl, iso-pentyl, neopentyl, or 2-ethylhexyl group); or a cyclic alkyl group (e.g., a cyclopropyl, cyclobutyl, cyclopentyl, cyclohexyl, cycloheptyl, or cyclooctyl group). Preferred is a linear, branched, or cyclic C1-20 alkyl group. Examples of the aralkyl group of $R^{8'}$ or $R^9$ include a benzyl group or a phenethyl group, and a $C_{7-20}$ aralkyl group is preferable. Examples of the aryl group of $R^{8'}$ or $R^9$ include a phenyl group, a tolyl group, or a xylyl group, and a $C_{6-20}$ aryl group is preferable. Examples of the alkenyl group of R8' or R9 include a linear alkenyl group (e.g., a vinyl, allyl, 3-butenyl, or 5-hexenyl group); a branched alkenyl group (e.g., an iso-butenyl or 5-methyl-3 pentenyl group); or a cyclic alkenyl group (e.g., a 2-cyclohexenyl or 3-cyclohexenyl group). Preferred is a C2-10 alkenyl group.

Specific examples of the alkoxysilicon compound represented by the above formula (i) include cyclohexylmethyldi, methoxysilane, cyclohexylethyldimethoxysilane, diisopropyldimethoxysilane, tert-butyl ethyl dimethoxysilane, tert-butyl n-propyl dimethoxysilane, phenyltrimethoxysilane, triethoxyphenylsilane, diphenyldimethoxysilane, dicyclobutyldimethoxysilane, dicyclopentyldimethoxysilane, tetraethoxysilane, methyltriethoxysilane, ethyltriethoxysilane, isobutyltriethoxysilane, vinyltriethoxysilane, sec-butyltriethoxysilane, cyclohexyltriethoxysilane, or cyclopentyltriethoxysilane. Preferred is tert-butyl n-propyl dimethoxysilane.

Examples of the hydrocarbyl group of $R^{10}$ in the above formula (ii) include the same groups as of $R^{8'}$ or $R^9$ in the above formula.

Examples of the hydrocarbyl group of R11 or R12 in the above formula (ii) include an alkyl group or an alkenyl group. Examples of the alkyl group of R11 or R12 include a linear alkyl group (e.g., a methyl, ethyl, n-propyl, n-butyl, n-pentyl, or n-hexyl group); a branched alkyl group (e.g., an iso-propyl, iso-butyl, tert-butyl, iso-pentyl, or neopentyl group); or a cyclic alkyl group (e.g., a cyclopropyl, cyclobutyl, cyclopentyl, or cyclohexyl group). Preferred is a C1-6 linear alkyl group. Examples of the alkenyl group of R4 or R5 include a linear alkenyl group (e.g., a vinyl, allyl, 3-butenyl, or 5-hexenyl group); a branched alkenyl group (e.g., an iso-butenyl or 5-methyl-3 pentenyl group); or a cyclic alkenyl group (e.g., a 2-cyclohexenyl or 3-cyclohexenyl group). A linear C2-6 alkenyl group is preferable, and a methyl group or an ethyl group is particularly preferable.

Specific examples of the aminosilicon compound represented by the above formula (ii) include bis(ethylamino)dicyclopentylsilane, bis(ethylamino)diisopropylsilane, or bis(methylamino)di-tert-butylsilane. Preferable examples include bis(ethylamino)dicyclopentylsilane.

The aminosilicon compound described in WO-A-2006/129773 can also be exemplified.

The ether as the external electron donor is preferably a cyclic ether compound. The cyclic ether compound is a heterocyclic compound having at least one -CO-C- bond in the ring structure, more preferably a cyclic ether compound having at least one -C-O-C-O-C- bond in the ring structure, and particularly preferably 1,3-dioxolane or 1,3-dioxane.

The external electron donor may be used singly or two or more kinds thereof may be used in combination.

The process of bringing the olefin polymerization-use solid catalyst component into contact with an aluminum compound and an external electron donor is not particularly limited as long as the olefin polymerization catalyst can be generated. The contact is carried out in the presence or absence of a solvent. The contact mixture may be fed into a polymerization reactor; each component may be separately supplied to a polymerization reactor and brought into contact in the polymerization reactor; or the contact mixture of any two components and the rest components may be separately supplied to a polymerization reactor and brought into contact in the polymerization reactor.

The amount of aluminum compound used is usually from 0.01 to 1000 μmol and preferably from 0.1 to 700 μmol, based on 1 mg of the olefin polymerization-use solid catalyst component.

The amount of the external electron donor used is usually from 0.0001 to 1000 μmol, preferably from 0.001 to 500 μmol, and more preferably from 0.01 to 150 μmol, based on 1 mg of the olefin polymerization-use solid catalyst component.

Method for forming olefin polymerization catalyst

In the production method according to the present invention, an olefin is polymerized in the presence of the above-described olefin polymerization catalyst.

In one embodiment, the method for forming an olefin polymerization catalyst may preferably include the following steps:

step (i) of polymerizing a small amount of olefin (the same as or different from an olefin used in the main polymerization step (usually referred to as main polymerization)) in the presence of an olefin polymerization-use solid catalyst component and an aluminum compound (optionally with an external electron donor and/or a chain transfer agent such as hydrogen so as to adjust the molecular weight of olefin polymer to be produced) to produce a catalyst component, the surface of which is covered with a polymer of the olefin (this polymerization is usually referred to as prepolymerization, and thus the catalyst component is usually referred to as a prepolymerization catalyst component); and

step (ii) of bringing the prepolymerization catalyst component into contact with the aluminum compound and the external electron donor.

The prepolymerization is preferably slurry polymerization using, as a solvent, inert hydrocarbon such as propane, butane, isobutane, pentane, isopentane, hexane, heptane, octane, cyclohexane, benzene, or toluene.

The amount of aluminum compound used in step (i) above is usually from 0.5 mol to 700 mol, preferably from 0.8 mol to 500 mol, and particularly preferably from 1 mol to 200 mol, based on 1 mol of titanium atoms in the solid catalyst component used in step (i).

The amount of olefin to be prepolymerized is usually from 0.01 g to 1000 g, preferably from 0.05 g to 500 g, and particularly preferably from 0.1 g to 200 g, based on 1 g of the olefin polymerization-use solid catalyst component used in step (i).

The slurry concentration of olefin polymerization-use solid catalyst component during slurry polymerization in step (i) is preferably 1 to 500 g of olefin polymerization-use solid catalyst component per liter of solvent, and particularly preferably 3 to 300 g of olefin polymerization-use solid catalyst component per liter of solvent.

The temperature of the prepolymerization is preferably from -20°C to 100°C, and particularly preferably from 0°C to 80°C. The partial pressure of olefin in the gas phase during the prepolymerization is preferably from 0.01 MPa to 2 MPa, and particularly preferably from 0.1 MPa to 1 MPa, but this is not the case for an olefin that is liquid at the pressure or temperature of the prepolymerization. The prepolymerization time is preferably 2 minutes to 15 hours.

Examples of a method of supplying an olefin polymerization-use solid catalyst component, an aluminum compound, and an olefin to a polymerization reactor during prepolymerization include the following methods (1) and (2) :

method (1) of supplying an olefin after supplying an olefin polymerization-use solid catalyst component and an aluminum compound; and

method (2) of supplying an aluminum compound after supplying an olefin polymerization-use solid catalyst component and an olefin.

Examples of a method of supplying an olefin to a polymerization reactor during prepolymerization include the following methods (1) and (2):

method (1) of sequentially supplying an olefin to a polymerization reactor so as to maintain a pressure in a polymerization reactor at a predetermined pressure; and
method (2) of supplying, as one portion, the whole volume of predetermined amount of olefin to a polymerization reactor.

The amount of external electron donor used during prepolymerization is usually from 0.01 mol to 400 mol, preferably from 0.02 mol to 200 mol, and particularly preferably from 0.03 mol to 100 mol, based on 1 mol of titanium atoms contained in the olefin polymerization-use solid catalyst component, and is usually from 0.003 mol to 50 mol, preferably from 0.005 mol to 30 mol, and particularly preferably from 0.01 mol to 10 mol, based on 1 mol of the aluminum compound.
Examples of a method of supplying an external electron donor to a polymerization reactor during prepolymerization include the following methods (1) and (2) :

method (1) of supplying an external electron donor alone to a polymerization reactor; and
method (2) of supplying a contact material containing an external electron donor and an aluminum compound to a polymerization reactor.

The amount of aluminum compound used in the main polymerization is usually from 1 mol to 1000 mol, and particularly preferably from 5 mol to 600 mol, based on 1 mol of titanium atoms in the olefin polymerization-use solid catalyst component.
When an external electron donor is used in the main polymerization, the amount of external electron donor used is usually from 0.1 mol to 2000 mol, preferably from 0.3 mol to 1000 mol, and particularly preferably from 0.5 mol to 800 mol, based on 1 mol of titanium atoms contained in the olefin polymerization-use solid catalyst component, and is usually from 0.001 mol to 5 mol, preferably from 0.005 mol to 3 mol, and particularly preferably from 0.01 mol to 1 mol, based on 1 mol of the aluminum compound.
The temperature of the main polymerization is usually from -30°C to 300°C, and preferably from 20°C to 180°C. The polymerization pressure is not particularly limited, and is generally from normal pressure to 10 MPa and preferably from about 200 kPa to 5 MPa from the viewpoint of industrial and economic efficiency. The polymerization is batch-type or continuous polymerization, and examples of the polymerization process include a slurry polymerization process or a solution polymerization process using, as a solvent, inert hydrocarbon (e.g., propane, butane, isobutane, pentane, hexane, heptane, octane), a bulk polymerization process using, as a medium, an olefin that is liquid at the polymerization temperature, or a gas phase polymerization process.
In order to adjust the molecular weight of polymer produced by the main polymerization, a chain transfer agent (e.g., hydrogen, alkyl zinc (e.g., dimethyl zinc, diethyl zinc)) may be used.

Method for producing heterophasic propylene polymerization material

In the present invention (invention 1), a method for producing a heterophasic propylene polymerization material is as follows:
a method for producing a heterophasic propylene polymerization material, comprising:

a first polymerization step of forming a polymer (I) by polymerizing propylene in presence of a contact product below and an olefin polymerization catalyst obtained by bringing an aluminum compound into contact with an olefin polymerization-use solid catalyst component containing a titanium atom, a magnesium atom, a halogen atom, and an internal electron donor; and
a second polymerization step of forming a polymer (II) by copolymerizing propylene with at least one kind selected from the group consisting of ethylene and $C_{4-12}$ $\alpha$-olefins in presence of the polymer (I),
the contact product obtained by bringing the aluminum compound into contact with an antioxidant represented by the following formula (1) or formula (2):

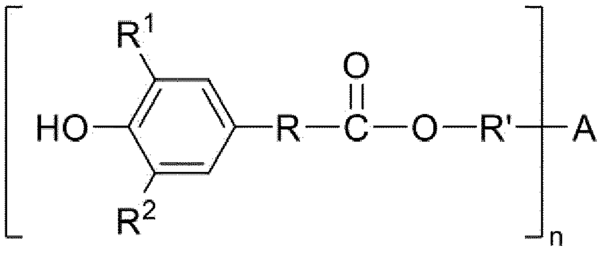

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

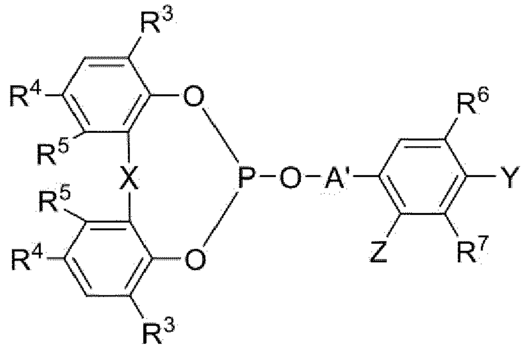

(2)

wherein:

$R^3$, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

Preferably, in the invention 1, the contact product is present in a gas-phase polymerization step in the first polymerization step.

In the present invention (invention 2), a method for producing a heterophasic propylene polymerization material is as follows:
a method for producing a heterophasic propylene polymerization material, comprising:

a first polymerization step of forming a polymer (I) by polymerizing propylene in presence of an olefin polymerization-use catalyst obtained by bringing an aluminum compound into contact with an olefin polymerization-use solid catalyst component containing a titanium atom, a magnesium atom, a halogen atom, and an internal electron donor; and
a second polymerization step of forming a polymer (II) by copolymerizing propylene with at least one kind selected from the group consisting of ethylene and $C_{4-12}$ $\alpha$-olefins in presence of the polymer (I) and a contact product below:

the contact product obtained by bringing the aluminum compound into contact with an antioxidant represented by the following formula (1) or formula (2):

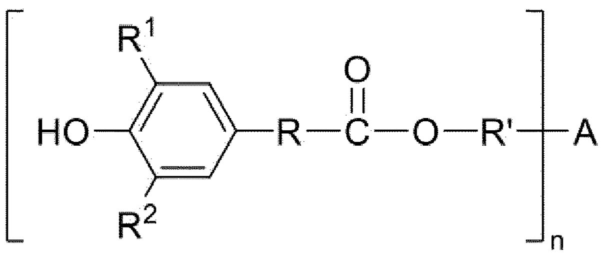

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

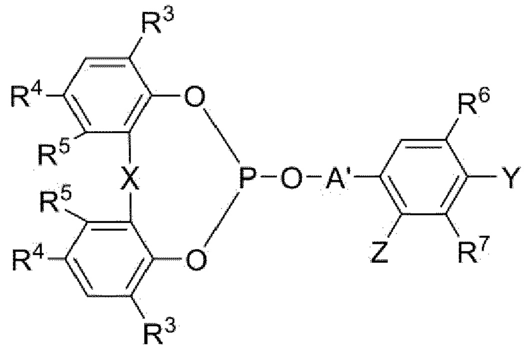

(2)

wherein:

$R^3$, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

Preferably, the copolymerization may be performed after the contact product and the polymer (I) are brought into contact with each other in the second polymerization step.
In the method for producing a heterophasic propylene polymerization material according to the present invention, propylene, for example, is polymerized in the presence of the olefin polymerization catalyst.
An example of the method for producing a heterophasic propylene polymerization material will be described. This production method includes the first and second polymerization steps.
First polymerization step: at least one step selected from the group consisting of

step 1-a of polymerizing a propylene-containing monomer in a liquid phase under a condition where a hydrogen/propylene ratio is appropriate to obtain at least part of a propylene-based polymer (a) and
step 1-b of polymerizing a propylene-containing monomer in a gas phase under a condition where a hydrogen/propylene ratio is appropriate to obtain at least part of a propylene-based polymer (a); and
second polymerization step: a step of polymerizing a monomer containing propylene and at least one α-olefin selected from the group consisting of ethylene and C4-12 α-olefins under a condition where a hydrogen/propylene ratio is appropriate to obtain a propylene-based copolymer (b).

Provided that as used herein, the hydrogen/propylene ratio is defined as follows.

In the case of polymerization in the liquid phase, the hydrogen/propylene ratio refers to the ratio of the substance amount of hydrogen as a gas to the substance amount of propylene as a liquid in the reactor supply unit.

In the case of polymerization in the gas phase, the hydrogen/propylene ratio refers to the ratio of the substance amount of hydrogen as a gas to the substance amount of propylene as a gas at the reactor outlet.

As used herein, for example, the phrase "the hydrogen/propylene ratio is 1 mol ppm" has the same meaning as "the hydrogen/propylene ratio is $1 \times 10^{-6}$ mol/mol", and means that $1 \times 10^{-6}$ mol of hydrogen is present per mol of propylene.

The hydrogen/propylene ratio is usually from 0.00001 to 10 mol/mol, preferably from 0.0001 to 1 mol/mol, and more preferably from 0.001 to 0.5 mol/mol.

[Step 1-a]

In step 1-a, for example, a liquid phase polymerization reactor may be used to polymerize a propylene-containing monomer in the presence of a polymerization catalyst and hydrogen. The configuration of the monomer used for polymerization may be adjusted, if appropriate, based on the type and content of the structural unit constituting the propylene-based polymer (a). The content of propylene in the monomer may be, for example, 80 mass% or more, 90 mass% or more, or 100 mass% based on the total mass of the monomer.

Examples of the liquid-phase polymerization reactor include a loop-type liquid phase reactor or a vessel-type liquid phase reactor.

Examples of the polymerization catalyst include a Ziegler-Natta catalyst or a metallocene catalyst, and a Ziegler-Natta catalyst is preferable. The Ziegler-Natta type catalyst is, for example, a catalyst containing the above-described olefin polymerization-use solid catalyst component, an aluminum compound, and an electron donating compound. A catalyst pre-activated by bringing a small amount of olefin into contact may also be used as a polymerization catalyst.

The polymerization catalyst used may be a prepolymerization catalyst component obtained by prepolymerizing an olefin in the presence of, for example, the above-described olefin polymerization-use solid catalyst component, n-hexane, triethylaluminum, and /or *tert*-butyl n-propyl dimethoxysilane. The olefin used in the prepolymerization is preferably any of the olefins constituting the heterophasic propylene polymerization material.

The polymerization temperature may be, for example, from 0 to 120°C. The polymerization pressure may be, for example, from normal pressure to 10 MPaG.

Step 1-a may be carried out continuously at multiple stages in series while using multiple reactors.

[Step 1-b]

In step 1-b, for example, a gas-phase polymerization reactor may be used to polymerize a propylene-containing monomer in the presence of a polymerization catalyst and hydrogen. The configuration of the monomer used for polymerization may be adjusted, if appropriate, based on the type and content of the structural unit constituting the propylene-based polymer (a). The content of propylene in the monomer may be, for example, 80 mass% or more, 90 mass% or more, or 100 mass% based on the total mass of the monomer.

Examples of the gas-phase polymerization reactor include a vessel-type reactor, a fluidized-bed-type reactor, or a spouted-bed-type reactor.

The gas-phase polymerization reactor may be a multistage gas-phase polymerization reactor having a plurality of reaction zones connected in series. The multistage gas-phase polymerization reactor may be a multistage gas-phase polymerization reactor having a plurality of polymerization tanks connected in series. According to such an apparatus, it is considered to be easy to adjust the intrinsic viscosity of the propylene-based polymer (a) to the above range.

The multistage gas-phase polymerization reactor may include, for example, a cylindrical section extending in a vertical direction and a tapered section formed and tapered downward in the cylindrical section and having a gas introduction opening at a lower end, and may be provided with: a spouted-bed-type olefin polymerization reaction zone having a spouted layer formed inside and surrounded by an inner surface of the tapered section and an inner surface of the cylindrical section disposed above the tapered section; and a fluidized-bed-type olefin polymerization reaction zone.

The multistage gas-phase polymerization reactor preferably has a plurality of reaction zones in the vertical direction. The multistage gas-phase polymerization reactor has, for example, a plurality of reaction zones in the vertical direction from the viewpoint of the intrinsic viscosity of the propylene-based polymer (a). Preferably, the uppermost stage is a fluidized-bed-type olefin polymerization reaction zone, and the rest are a plurality of spouted-bed-type olefin polymerization reaction zones. In such an apparatus, for example, a solid component is supplied from an upper part of the apparatus, and a gas component is supplied from a lower part of the apparatus, thereby forming a fluidized bed or a spouted bed in the corresponding reaction zone. The gas component may contain an inert gas (e.g., nitrogen) in addition to the propylene-containing monomer and hydrogen. In the apparatus, the number of spouted-bed-type olefin polymerization reaction zones is preferably 3 or more.

When the plurality of reaction zones are disposed in the vertical direction, the reaction zone(s) in the lower stage may be arranged obliquely downward of the reaction zone(s) in the upper stage. In such an apparatus, for example, the solid component obtained in an upper reaction zone is discharged in the obliquely downward direction, and the discharged solid component is supplied to a lower reaction zone from the obliquely upward direction. In this case, for example, the gas component discharged from the upper part of the lower reaction zone is supplied from the lower part of the upper reaction zone.
Specific examples of the polymerization catalyst are as described above.
The polymerization temperature may be, for example, from 0 to 120°C, from 20 to 100°C, or from 40 to 100°C. The polymerization pressure may be, for example, from normal pressure to 10 MPaG or from 1 to 5 MPaG.

[Second polymerization step]

The second polymerization step may be performed in a liquid phase or a gas phase, but is performed in a gas phase, for example. In the case of a liquid phase, for example, a liquid phase reactor (e.g., a loop-type or vessel-type reactor) may be used. In the case of a gas phase, for example, a gas phase reactor (e.g., a vessel-type reactor, a fluidized-bed-type reactor, a spouted-bed-type reactor) may be used.
The second polymerization step includes polymerizing a monomer containing propylene and at least one α-olefin selected from the group consisting of ethylene and $C_{4-12}$ α-olefins in the presence of a polymerization catalyst and hydrogen. The configuration of the monomer used for polymerization may be adjusted, if appropriate, based on the type and content of the structural unit constituting the propylene-based copolymer (b). The content of at least one α-olefin selected from the group consisting of ethylene and $C_{4-12}$ α-olefins in the monomer used for polymerization may be, for example, from 30 to 55 mass% or from 35 to 50 mass% based on the total mass of the monomer.
Specific examples of the polymerization catalyst are as described above.
In the case of polymerization in a liquid phase, the polymerization temperature is, for example, from 40 to 100°C, and the polymerization pressure is, for example, from normal pressure to 5 MPaG. In the case of polymerization in a gas phase, the polymerization temperature is, for example, from 40 to 100°C, and the polymerization pressure is, for example, from 0.5 to 5 MPaG.
The propylene-based polymer (a) and the propylene-based copolymer (b) may be prepared in the respective steps, the polymerization catalyst may be deactivated, and the propylene-based polymer (a) and the propylene-based copolymer (b) may then be mixed in a solution state, a molten state, or the like. However, a polymer may be continuously prepared by supplying the resulting polymer to the next step without deactivating the catalyst. When polymerization is continuously performed without deactivating the catalyst, the polymerization catalyst in the previous step also acts as a polymerization catalyst in the subsequent step.
The order of the first polymerization step and the second polymerization step is not particularly limited. The first polymerization step may include steps 1-a and 1-b.
The production method according to this embodiment may include, in sequence, step 1-a, step 1-b, and the second polymerization step. Step 1-b may not be included.

Method for producing olefin polymer

In the present invention (invention 1), a method for producing an olefin polymer is as follows:

a method for producing an olefin polymer, comprising the step of:
forming an olefin polymer by continuously polymerizing at least one kind selected from the group consisting of ethylene, propylene, and $C_{4-12}$ α-olefins
in presence of an olefin polymer (α) below:

the olefin polymer (α): an olefin polymer formed by polymerizing an olefin in presence of a contact product below and an olefin polymerization catalyst obtained by bringing an olefin polymerization-use solid catalyst component into contact with an aluminum compound, and obtained by polymerizing 10 kg or more and 60 kg or less of the olefin based on 1 g of the olefin polymerization-use solid catalyst component.
the contact product obtained by bringing the aluminum compound into contact with an antioxidant represented by the following formula (1) or formula (2):

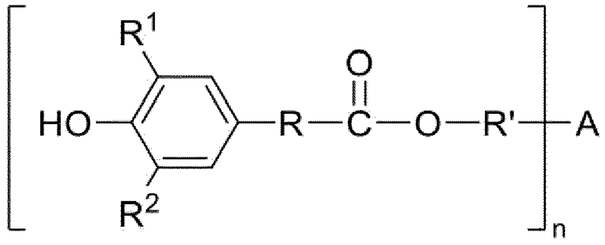

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

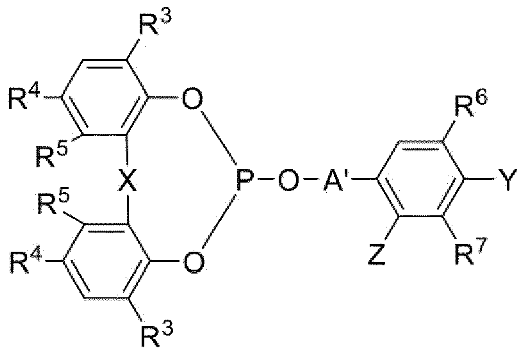

(2)

wherein:

R3, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

Preferably, the step of forming an olefin polymer by continuously polymerizing at least two kind selected from the group consisting of ethylene, propylene, and $C_{4-12}$ $\alpha$-olefins is a step of forming an olefin polymer by continuously polymerizing at least one kind selected from the group consisting of ethylene, propylene, and $C_{4-12}$ $\alpha$-olefins.
In addition, in the present invention (invention 2), a method for producing an olefin polymer is as follows: a method for producing an olefin polymer, comprising the step of:

forming an olefin polymer by continuously polymerizing at least one kind selected from the group consisting of ethylene, propylene, and $C_{4-12}$ $\alpha$-olefins
in presence of an olefin polymer ($\alpha$) below and a contact product below:

the olefin polymer ($\alpha$) obtained by polymerizing 10 kg or more and 60 kg or less of olefin per g of an olefin polymerization-use solid catalyst component.
the contact product obtained by bringing the aluminum compound into contact with an antioxidant represented by the following formula (1) or formula (2):

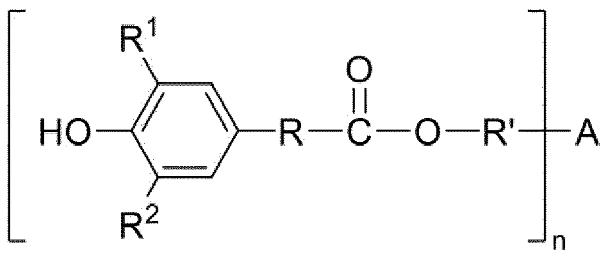

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

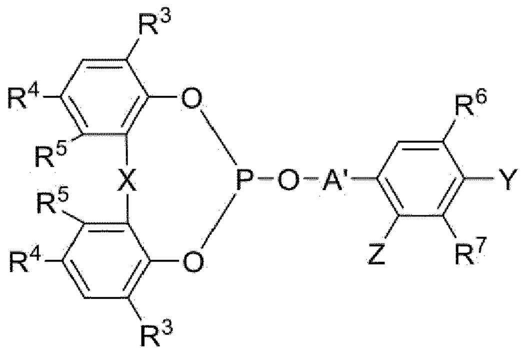

(2)

wherein:

$R^3$, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

Preferably, the step of forming an olefin polymer by continuously polymerizing at least two kind selected from the group consisting of ethylene, propylene, and $C_{4-12}$ $\alpha$-olefins is a step of forming an olefin polymer by continuously polymerizing at least one kind selected from the group consisting of ethylene, propylene, and $C_{4-12}$ $\alpha$-olefins.
In the method for producing an olefin polymer according to the present invention, the amount of antioxidant in the contact product may be preferably from 0.0001 to 1 part by weight, more preferably from 0.001 to 0.5 parts by weight, and still more preferably from 0.002 to 0.3 parts by weight, based on 100 parts by weight of the olefin polymer ($\alpha$).
In the method for producing an olefin polymer according to the present invention, the "step of forming an olefin polymer by continuous polymerization" may be a step equivalent to the "second polymerization step" in the method for producing a heterophasic propylene polymerization material according to the present invention.
The olefin polymer ($\alpha$) is preferably a "propylene polymer", and more preferably the polymer (I). The olefin polymer ($\alpha$) may be produced by a step equivalent to the "first polymerization step" in the method for producing a heterophasic propylene polymerization material according to the present invention.
In the present invention, the method for producing an olefin polymer is preferably the method for producing a heterophasic propylene polymerization material.

Olefin polymer

In the present invention, the olefin polymer obtained through the method for producing an olefin polymer is preferably the above heterophasic propylene polymerization material.

Antioxidant

The antioxidant used in the production method of the present invention is an antioxidant represented by the following formula (1) or formula (2):

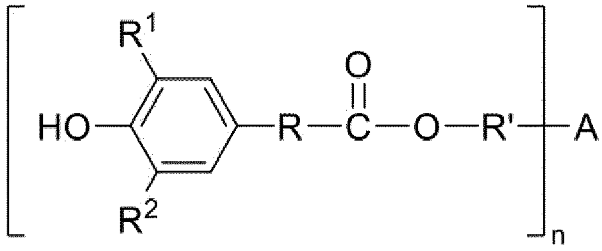

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

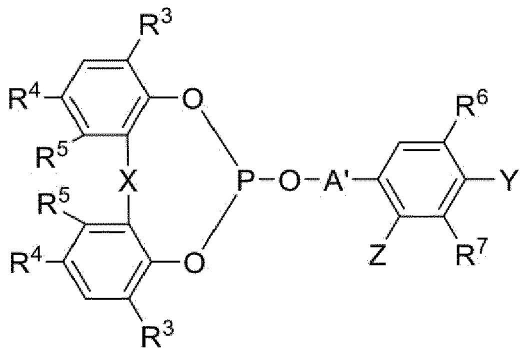

(2)

wherein:

$R^3$, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

In the above formula, preferably n = 1 or 4.

Examples of the antioxidant represented by formula (1) or an antioxidant which is not represented by formula (1) but can be used in the present invention include the following:
2,6-di-tert butyl-4-ethylphenol, 2-tert-butyl-4,6-dimethylphenol, styrenated phenol, 2,2'-methylenebis(4-ethyl-6-tert-butylphenol), 2,2'-thiobis-(6-tert-butyl-4-methylphenol), 2,2'-thiodiethylenebis[3-(3,5-di-tert-butyl 4-hydroxyphenyl)propionate], 2-methyl-4,6-bis(octylsulfanylmethyl)phenol, 2,2'-isobutylidenebis(4,6-dimethylphenol), isooctyl 3-(3,5-di-tert-butyl-4-hydroxyphenyl)propionate, N,N'-(hexan-1,6-diyl)bis[3-(3,5-di-tert-butyl-4-hydroxyphenyl)propionamide, 2,2'-oxamide-bis[ethyl-3-(3,5-di-tert-butyl-4-hydroxyphenyl)propionate], 2-ethylhexyl-3-(3',5'-di-tert-butyl-4'-hydroxyphenyl)propionate, 2,2'-ethylenebis(4,6-di-tert-butylphenol), a $C_{13-15}$ alkyl ester of 3,5-bis(1,1-dimethylethyl)-4-hydroxy-benzenepropanoic acid, 2,5-di-tert-amylhydroquinone, a polymer of hindered phenol (trade name: AO.OH. 998; manufactured by Palmarole), 2,2'-methylenebis[6-(1-methylcyclohexyl)-p-cresol], 2-tert-butyl-6-(3-tert-butyl-2 hydroxy-5-methylbenzyl-4-methylphenylacrylate, 2-[1-(2-hydroxy-3,5-di-tert-pentylphenyl)ethyl]-4,6-di-tert-pentylphenylacrylate hexamethylenebis[3-(3,5-di-tert-butyl-4-hydroxyphenyl)propionate], bis[monoethyl(3,5-di-tert-butyl-4 hydroxybenzyl)phosphonate calcium salt, a reaction product of 5,7-bis(1,1-dimethylethyl)-3 hydroxy-2(3H)-benzofuranone with o-xylene, 2,6-di-tert-butyl-4-(4,6-bis(octylthio)-1,3,5-triazin-2-ylamino phenol, DL-α-tocopherol(vitamin E), 2,6-bis(α-methylbenzyl)-4-methylphenol, bis [3,3-bis-(4'-hydroxy-3'-tert-butylphenyl)butylate]glycol ester, 2,6-di-tert-butyl-p-cresol, 2,6-diphenyl-4-octadecyloxyphenol, stearyl(3,5-di-tert-butyl-4-hydroxyphenyl)propionate, distearyl(3,5-di-tert-butyl-4-hydroxybenzyl)phosphonate, tridecyl-3,5-di-tert-butyl-4-hydroxybenzylthioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylenebis(4-methyl-6 tert-butylphenol), bis[3,3-bis(4-hydroxy-3 tert-butylphenyl)butyric acid] glycol ester,4,4'-butylidenebis(2,6-di-tert-butylphenol), 4,4'-butylidenebis(6-tert-butyl-3-methylphenol), 2,2'-ethylidenebis(4,6-di-tert-butylphenol), 1,1,3-tris(2-methyl-4-hydroxy-5-tert-butylphenyl)butane, bis[2-tert-butyl-6-(2-hydroxy-3-tert-butyl-5-methylbenzyl)-4 methylphenyl]terephthalate, 1,3,5-tris(2,6-dimethyl-3-hydroxy-4-tert-butylbenzyl)isocyanuate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, pentaerythritol tetrakis[3-(3',5'-di-tert-butyl-4'-hydroxyphenyl)propionate], octadecyl 3- (3,5-di-tert-butyl-4 -hydroxyphenyl)propionate, 2-tert-butyl-4 methyl-6-(2-acryloyloxy-3-tert-butyl-5-methylbenzyl)phenol, 3,9-bis[2-(3-tert-butyl-4-hydroxy-5-methylhydrocinnamoyloxy)-1,1-dimethylethyl]-2,4,8,10-tetraoxaspiro[5.5]undecane, triethylene glycol bis[β-(3-tert-butyl-4-hydroxy-5-methylphenyl)propionate], stearyl-3-(3,5-di-tert-butyl-4-hydroxyphenyl)propionamide, palmityl-3-(3,5-di-tert-butyl-4-hydroxyphenyl)propionate amide, myristyl-3-(3,5-di-tert-butyl-4-hydroxyphenyl)propionamide, lauryl-3-(3,5-di-tert-butyl-4 hydroxyphenyl)propionamide, or mixtures thereof.

Examples of the particularly preferred phenolic antioxidant include pentaerythritol tetrakis[3-(3',5'-di-tert-butyl-4'-hydroxyphenyl)propionate] or octadecyl 3-(3,5-di-tert-butyl-4-hydroxyphenyl)propionate. octadecyl 3-(3,5-di-tert-butyl-4-hydroxyphenyl)propionate

Examples of the antioxidant represented by formula (2) include those described in Japanese Patent No. 4193223. Examples of the particularly preferred phenol phosphite-based antioxidant include 6-[3-[3-(3-tert-butyl-4 hydroxy-5-methylphenyl)propoxy]-2,4,8,10-tetra-tert-butyl dibenzi[d,f][1,3,2]dioxaphosphepine.

In addition, a phosphorus-based antioxidant may be used in combination with the formula (1) or (2). Examples of the phosphorus-based antioxidant include the following:
triphenyl phosphite, tris(nonylphenyl)phosphite, tris (2,4-di-tert-butylphenyl)phosphite, trilauryl phosphite, trioctadecyl phosphite, triisodecyl phosphite, triisooctyl phosphite, distearyl pentaerythritol diphosphite, diisodecyl pentaerythritol diphosphite, bis(2,4-di-tert-butylphenyl)pentaerythritol diphosphite, bis(2,4-di-tert-butyl-6-methylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, tristearyl sorbitol triphosphite, tetrakis(2,4-di-tert-butylphenyl)-4,4'-diphenylene diphosphonite, 2,2'-methylenebis(4,6-di-tert-butylphenyl)-2-ethylhexyl phosphite, 2,2'-ethylidenebis(4,6-di-tert-butylphenyl)fluorophosphite, bis(2,4-di-tert-butyl-6-methylphenyl)ethyl phosphite, bis(2,4-di-tert-butyl-6-methylphenyl)methyl phosphite, 2-(2,4,6-tri-tert-butylphenyl)-5-ethyl-5-butyl-1,3,2-oxaphospholinane, 2,2',2"-nitrilo[triethyl-tris(3,3',5,5'-tetra-tert-butyl-1,1'-biphenyl-2,2'-diyl)phosphite, or mixtures thereof.

Examples of the particularly preferred phosphorus-based antioxidant include tris(2,4-di-tert-butylphenyl)phosphite.

Contact product obtained by bringing aluminum compound into contact with antioxidant

In the present invention, the "aluminum compound" used when the "contact product obtained by bringing an aluminum compound into contact with an antioxidant represented by formula (1) or formula (2)" is obtained may be preferably the same as the aluminum compound in the olefin polymerization catalyst, and more preferably triethylaluminum.

The contact product can be obtained by bringing the aluminum compound and the antioxidant into contact at a ratio of 0.1 to 20 mmol, preferably 1 to 15 mmol, of the aluminum compound based on 1 g of the antioxidant.

The chemical structural formula of the contact product is not necessarily clear. However, one example may be a contact product with an antioxidant masked by a reaction of an aluminum compound with a -OH group in the antioxidant as in the following reaction scheme (scheme of reaction of the antioxidant represented by formula (1) with an aluminum compound ($AlEt_3$: triethylaluminum)).

[Scheme A]

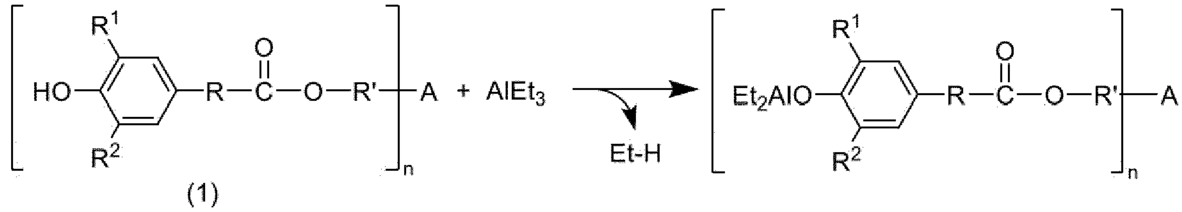

(1)

Method of storing contact product obtained by bringing aluminum compound into contact with antioxidant

In connection to the present invention, the following discloses the method of storing a contact product obtained by bringing an aluminum compound into contact with an antioxidant.

[1] A method of storing a contact product, comprising storing, in a storage container selected from the group consisting of glass containers, resin containers, and metal containers having a surface coated with glass or resin, a contact product containing an antioxidant and an aluminum compound represented by the following formula (4):

$$AlR''_3 \qquad (4)$$

wherein R" moieties each independently represent an alkyl group or a halogen atom.
[2] The method of storing a contact product according to [1], wherein the contact product further contains a hydrocarbon solvent.
[3] The method of storing a contact product according to [1] or [2], wherein the contact product is an antioxidant represented by the above formula (1) or formula (2).
[4] The method of storing a contact product according to [3], wherein n in the formula (1) is 4.
[5] The method of storing a contact product according to any one of [1] to [4], wherein the aluminum compound is represented by the following formula (5):

$$AlR'''_nX'_{3-n} \qquad (5)$$

wherein R‴ moieties each independently represent an alkyl group, X' represents a halogen atom, and $0 < n \leq 3$. A preferred aluminum compound is triethylaluminum.

Examples

Hereinafter, the present invention will be described more specifically with reference to Examples and Comparative Example. However, the invention is not limited to the Examples below.

<To measure intrinsic viscosity [η] (unit: dL/g)>

A tetralin solution (3 types of concentration: 0.1 g/dL, 0.2 g/dL, and 0.5 g/dL) containing a propylene-based polymer or a heterophasic propylene polymerization material was prepared. Thereafter, the reduced viscosity of the tetralin solution was measured at 135°C using an Ubbelohde-type viscometer. Each intrinsic viscosity was then determined by the calculation method described in page 491 of "Polymer Solution, Polymer Experimentation 11" (published by KYORITSU SHUPPAN CO., LTD., 1982), that is, the extrapolation method in which the reduced viscosity is plotted with respect to the concentration and the concentration is extrapolated to 0.

<Content (unit: mass%) of ethylene structural unit in heterophasic propylene polymerization material>

In accordance with IR spectrum measurement described on page 619 of Polymer Analysis Handbook (1995, published by KINOKUNIYA COMPANY LTD.), the content of ethylene structural unit in the heterophasic propylene polymerization material as obtained by an IR spectrum method was determined. The content of ethylene structural unit in the heterophasic propylene polymerization material was divided by the content of the polymer (II) in the heterophasic

propylene polymerization material to determine the content of ethylene structural unit in the polymer (II). Note that the proportion of polymer (II) in the heterophasic propylene polymerization material was determined by a method described later.

Also note that the term "ethylene structural unit" as used herein means a structural unit derived from ethylene.

<To measure content (unit: mass%) of polymer (II) in heterophasic propylene polymerization material in invention 2>

The heat of fusion (unit: J/g) of the heterophasic propylene polymerization material was measured using a differential scanning calorimeter (DSC). A sample (about 5 mg) of the heterophasic propylene polymerization material was filled in an aluminum pan, and placed in a differential scanning calorimeter, a DSC 8500 model apparatus (manufactured by PerkinElmer, Inc.). The temperature was raised to 230°C, and the sample was kept at 230°C for 5 minutes; and the temperature was lowered to 0°C at a rate of 5°C/min, and the sample was kept at 0°C for 5 minutes. The temperature was corrected by setting the melting point of indium to 156.6°C. The heat of fusion was calculated from the fusion peak area in the melting curve, and the content of polymer (II) was then determined using the following formula (1):

$$\text{Content of polymer (II)} = (1 - (\text{heat of fusion})/105) \times 100 \quad (1).$$

<To measure content of polymer (II) in heterophasic propylene polymerization material in invention 1>

The content was obtained by measuring the heat of crystal fusion of the whole of the polymer (I) and the heterophasic propylene polymerization material and by calculation using the following formula. Here, the heat of crystal fusion was measured by differential scanning calorimetry (DSC).

$$\text{Content of polymer (II)} = 1 - (\Delta Hf)T/(\Delta Hf)P$$

where (ΔHf)T is the fusion heat (J/g) of the whole heterophasic propylene polymerization material; and (ΔHf)P is the fusion heat (J/g) of polymer (I).

<To measure bulk density BD (unit: g/cm$^3$) of heterophasic propylene polymerization material>

The bulk density BD of the heterophasic propylene polymerization material was measured in accordance with JIS K 6720-2:1999 (ISO 1060-2) under conditions at room temperature of 20 to 25°C.

<Kneading deterioration test for heterophasic propylene polymerization material>

In the kneading deterioration test for the heterophasic propylene polymerization material, a tabletop kneader (MC15HT), manufactured by Xplore, was used to perform codirectional biaxial kneading under atmospheric conditions at 200°C and a rotation speed of 100 rpm. The amount of heterophasic propylene polymer sample injected was 12 g. Based on the torque value at 5 minutes after the start of kneading, the time required for the torque value to decrease by 15% was used as the stability index of the polymer. Fig. 4 shows a photograph of the kneader.

<To measure cold xylene soluble component amount CXS (unit: mass%)>

A sample (propylene-based polymer or heterophasic propylene polymerization material) was dissolved in boiling xylene, and the resulting xylene solution was then cooled to precipitate a cold xylene insoluble component. The obtained mixture was filtered, and the propylene-based polymer or the heterophasic propylene polymerization material (cold xylene soluble component) dissolved in the resulting filtrate was quantified by liquid chromatography (LC) .

(Pretreatment Conditions)

- Sample amount: 1 g of propylene-based polymer or 0.1 g of heterophasic propylene polymerization material
- Solvent: 100 mL of xylene containing dibutylhydroxytoluene (BHT) at a concentration of 2 mg/100 mL (special grade,

manufactured by FUJIFILM Wako Pure Chemical Corporation)

- Dissolution conditions: reflux for 30 minutes after boiling
- Temperature conditions: cooled with ice water for 20 minutes, and then stirred for 1 hour after the temperature was raised to 20°C.
- Filtration conditions: filtered with filter paper (No. 50) and then measured by LC.

(LC Measurement Conditions)

- Liquid feeding pump: LC-20AD (manufactured by Shimadzu Corporation)
- Degasser: DGU-20A3 (manufactured by Shimadzu Corporation)
- Autosampler: SIL-20A HT (manufactured by Shimadzu Corporation)
- Column oven: CTO-20A (manufactured by Shimadzu Corporation)
- Differential refractive index detector: RID-10A (manufactured by Shimadzu Corporation)
- System controller: CBM-20A (manufactured by Shimadzu Corporation)
- Measurement and analysis software: LC solution ver. 1.24 SP1
- Column: SHODEX GPC KF-801 ((upper limit) exclusion limit molecular weight: 1500)
- Eluent: tetrahydrofuran (special grade without any stabilizer, manufactured by KANTO CHEMICAL CO., INC.)
- Column oven temperature: 40°C
- Sample injection volume: 130 μL
- Flow rate: 1 mL/min
- Detector: differential refractometer

<To measure isotactic pentad fraction [mmmm]>

The isotactic pentad fraction of propylene-based polymer or polymer (I) in the heterophasic propylene polymerization material was measured in accordance with a method using a $^{13}$C-NMR spectrum described in Macromolecules, 6,925 (1973) by A. Zambelli *et al.* Each absorption peak obtained by $^{13}$C-NMR spectrum was assigned based on Macromolecules, 8,687 (1975). Specifically, the ratio of the area of the mmmm peak to the area of all the absorption peaks of the methyl carbon region as obtained by $^{13}$C-NMR spectrum was determined as the isotactic pentad fraction. Note that the isotactic pentad fraction of the NPL standard CRM No. M 19-14 Polypropylene PP/MWD/2 of NATIONAL PHYSICAL LABORATORY in the UK as determined by this method was 94.4. $^{13}$C-NMR measurement was performed under the following conditions.

(Measurement Conditions)

- Model: Bruker AVANCE 600
- Probe: 10 mm cryoprobe
- Measurement temperature: 135°C
- Pulse repeating time: 4 seconds
- Pulse width: 45°
- Number of integrations: 256 times
- Magnetic field strength: 600 MHz

<Synthesis Example 1: To synthesize olefin polymerization-use solid catalyst component (1)>

The gas in a 200-L SUS reactor with a stirrer was replaced with nitrogen gas, and toluene (52.8 L) was then added and stirred. Next, magnesium diethoxide (10.8 kg) was added thereto to prepare a slurry. The temperature of the obtained slurry was adjusted to 0°C or lower, and titanium tetrachloride (33.0 L) was then added in three portions while stirring. The resulting mixture was kept at a temperature not exceeding 3°C for 30 minutes. Ethyl 2-ethoxymethyl-3,3-dimethylbutanoate (0.76 kg) was added to the resulting mixture, the temperature was raised to 10°C, and the mixture was then kept for 120 minutes. Toluene (14.3 L) was added to the resulting mixture, the temperature was raised to 60°C, and ethyl 2-ethoxymethyl-3,3-dimethylbutanoate (4.0 kg) was then added thereto at the same temperature. The mixture obtained was then heated to 110°C and stirred at the same temperature for 180 minutes. The resulting mixture was subjected to solid-liquid separation at 110°C, and the resulting solid was then washed 3 times with toluene (83 L) at

95°C. Toluene (34 L) was added to the resulting mixture, and titanium tetrachloride (22 L) and ethyl 2-ethoxymethyl-3,3-dimethylbutanoate (0.95 kg) were then added thereto at 60°C. The mixture obtained was heated to 110°C and stirred at the same temperature for 30 minutes. The resulting mixture was subjected to solid-liquid separation at 110°C, and the resulting solid was then washed three times with toluene (83 L) at 95°C. The mixture obtained was washed three times with hexane (83 L) and then dried to produce an olefin polymerization-use solid catalyst component (1) (10.6 kg).

Olefin polymerization-use solid catalyst component (2): YC-100 series catalyst, manufactured by Toho Titanium Co., Ltd. (an olefin polymerization-use solid catalyst component containing a titanium atom, a magnesium atom, a halogen atom, and an internal electron donor)

The following describes Examples X1 to X7 of invention 1 and Comparative Examples C4 and C6.

<Example X1>

To prepare antioxidant contact product A

Hexane (11.6 L), triisobutylaluminum (0.825 mol), pentaerythritol tetrakis[3-(3',5'-di-tert-butyl-4'-hydroxyphenyl)propionate] (330 g), and tris(2,4-di-t-butylphenyl)phosphite (660 g) were brought into contact in a stainless steel container. The inside of the stainless steel container was pressurized with argon so that the gauge pressure was 0.8 MPa. The material was stored for 2 days to produce an antioxidant contact product A.

To synthesize heterophasic propylene polymerization material (X1)

[Prepolymerization]

To a stainless steel (SUS) autoclave having an internal volume of 2 L and equipped with a stirrer were added 1.7 L of sufficiently dehydrated and degassed n-hexane, 42 mmol of triethylaluminum (organoaluminum compound), and 4.2 mmol of tert-butyl-n-propyl-dimethoxysilane. To the autoclave was added 13 g of the olefin polymerization-use solid catalyst component (1). Then, prepolymerization was performed by continuously supplying 13 g of propylene over about 30 minutes while maintaining the temperature of the autoclave at about 10°C. After that, the obtained slurry was transferred to an SUS316L autoclave having an internal volume of 160 L and equipped with a stirrer to prepare a slurry further containing 130 L of liquid butane.

[Main Polymerization]

<Polymerization Step 1-a1> (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry containing propylene, hydrogen, triethylaluminum (organoaluminum compound), tert-butyl-n-propyl-dimethoxysilane, and the above-described prepolymerization catalyst component as obtained in the prepolymerization step was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 18 L
- Propylene supply rate: 40 kg/hour
- Hydrogen supply rate:199 NL/hour
- Prepolymerization slurry supply rate (converted to the olefin polymerization-use solid catalyst component): 0.42 g/hour
- Triethylaluminum (organoaluminum compound) supply rate: 27.8 mmol/hour
- Tert-butyl-n-propyl-dimethoxysilane supply rate: 8.1 mmol/hour
- Polymerization pressure: 3.97 MPa (gauge pressure)

[Polymerization Step 1-a2] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a1 was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 44 L
- Propylene supply rate: 40 kg/hour
- Hydrogen supply rate: 177 NL/hour
- Polymerization pressure: 3.54 MPa (gauge pressure)

[Polymerization Step 1-b] (Homopolymerization (Gas Phase Polymerization) of Propylene by Using Gas Phase Polymerization Reactor (Gas Phase Polymerization))

The slurry obtained in the polymerization step 1-a2 was further continuously supplied to a subsequent gas-phase polymerization reactor. The gas-phase polymerization reactor used in the polymerization step 1-b is a reactor including a gas dispersion plate. Propylene and hydrogen were continuously supplied from the lowermost side of the gas-phase polymerization reactor. In this way, a fluidized bed was formed in each reaction zone of multiple stages, the amounts of propylene and hydrogen supplied were controlled so as to keep constant the gas composition and the pressure, and propylene was further subjected to homopolymerization while the excess gas was purged. At this time, the antioxidant contact product A was continuously supplied so that pentaerythritol tetrakis[3-(3',5'-di-tert-butyl-4'-hydroxyphenyl)propionate] contained in the heterophasic propylene polymerization material (X1) was 0.050 phr and tris(2,4-di-t-butylphenyl)phosphite contained therein was 0.100 phr. The reaction conditions were as follows.

- Polymerization temperature: 80°C
- Polymerization pressure: 1.95 MPa (gauge pressure)
- Gas concentration ratio (hydrogen/(hydrogen + propylene)): 9.3 mol%

The intrinsic viscosity [η]I of the product (polymer (I)) sampled from the outlet of the gas-phase polymerization reactor was 0.85 dL/g.

[Polymerization Step 2] (Propylene-Ethylene Copolymerization by Using Gas Phase Polymerization Reactor (Gas Phase Polymerization))

The polymer (I) discharged from the gas-phase polymerization reactor used in the polymerization step 1-b was further continuously supplied to a subsequent gas phase polymerization reactor. The gas-phase polymerization reactor used in the polymerization step 2 is a reactor including a gas dispersion plate. Propylene, ethylene, and hydrogen were continuously supplied to the gas phase polymerization reactor as configured above. While the gas supply amount was adjusted so as to keep constant the gas composition and the pressure and the excess gas was purged, propylene and ethylene were subjected to copolymerization in the presence of the polymer (I) (particles). In this way, an ethylene-propylene copolymer, namely a polymer (II), was generated. Then, a heterophasic propylene polymerization material, which was a mixture of the polymer(I) and the polymer (II), was obtained. The reaction conditions were as follows.

- Polymerization temperature: 70°C
- Polymerization pressure: 1.10 MPa (gauge pressure)
- Gas concentration ratio (ethylene/(propylene + ethylene)): 25.2 mol%

(hydrogen/(hydrogen + propylene + ethylene)): 0.38 mol%

The intrinsic viscosity [η]whole of the product (heterophasic propylene polymerization material) sampled from the outlet of the gas-phase polymerization reactor was 1.47 dL/g.

The obtained heterophasic propylene polymerization material (X1) had a cold xylene soluble component amount CXS of 8.4 mass%. The heterophasic propylene polymerization material (X1) had an ethylene structural unit content of 3.9 mass% and a propylene structural unit content of 96.1 mass%. In addition, the content of the polymer (II) was 12.4 mass%. The polymer (II) had an ethylene structural unit content of 31.6 mass%, and had an intrinsic viscosity [η]II of 5.87 dL/g. The polymer (I) had an isotactic pentad fraction of 0.985.

The obtained heterophasic propylene polymerization material (X1) was subjected to a kneading deterioration test, and the time required for the torque value to decrease by 15% based on the torque value after 5 minutes from the start of kneading was 75 minutes.

<Example X2>

To prepare antioxidant contact product B

Butane (3.5 L), triisobutylaluminum-containing hexane solution (19 wt%, 2.0 L), pentaerythritol tetrakis[3-(3',5'-di-tert-butyl-4'-hydroxyphenyl)propionate] (130 g), and tris(2,4-di-t-butylphenyl)phosphite (260 g) were brought into contact in a stainless steel container. The inside of the stainless steel container was kept at a gauge pressure of 0.21 MPa or higher, and the material was stored for 24 hours or longer to prepare an antioxidant contact product B. Between the liquid preparation and use, the mixture was diluted with butane to an appropriate concentration and then supplied to the polymerization reactor.

To synthesize heterophasic propylene polymerization material (X2)

[Prepolymerization]

To a stainless steel (SUS) autoclave having an internal volume of 2 L and equipped with a stirrer were added 1.8 L of sufficiently dehydrated and degassed n-hexane, 53 mmol of triethylaluminum (organoaluminum compound), and 5.3 mmol of tert-butyl-n-propyl-dimethoxysilane. To the autoclave was added 17 g of the olefin polymerization-use solid catalyst component (2). Then, prepolymerization was performed by continuously supplying 17 g of propylene over about 30 minutes while maintaining the temperature of the autoclave at about 10°C. After that, the obtained slurry was transferred to an SUS316L autoclave having an internal volume of 160 L and equipped with a stirrer to prepare a slurry further containing 131 L of liquid butane.

[Main Polymerization]

<Polymerization Step 1-a1> (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry containing propylene, hydrogen, triethylaluminum (organoaluminum compound), tert-butyl-n-propyl-dimethoxysilane, and the above-described prepolymerization catalyst component as obtained in the prepolymerization step was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 18 L
- Propylene supply rate: 30 kg/hour
- Hydrogen supply rate: 192 NL/hour
- Prepolymerization slurry supply rate (converted to the olefin polymerization-use solid catalyst component): 0.50 g/hour
- Triethylaluminum (organoaluminum compound) supply rate: 29.7 mmol/hour
- Amount of tert-butyl-n-propyl-dimethoxysilane (silicon compound T) supplied: 8.7 mmol/hour
- Polymerization pressure: 4.05 MPa (gauge pressure)

[Polymerization Step 1-a2] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a1 was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 44 L
- Propylene supply rate: 32 kg/hour
- Hydrogen supply rate: 192 NL/hour
- Polymerization pressure: 3.80 MPa (gauge pressure)

[Polymerization Step 1-a3] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a2 was continuously supplied to a slurry polymerization reactor to perform a polymerization reaction. The reaction conditions were as follows.

- Polymerization temperature: 67°C
- Stirring speed: 150 rpm
- Liquid level of the slurry polymerization reactor: 44 L
- Propylene supply rate: 3 kg/hour
- Polymerization pressure: 3.47 MPa (gauge pressure)

[Polymerization Step 1-b] (Homopolymerization (Gas Phase Polymerization) of Propylene by Using Gas Phase Polymerization Reactor (Gas Phase Polymerization))

The slurry obtained in the polymerization step 1-a3 was further continuously supplied to a subsequent gas-phase polymerization reactor. The gas-phase polymerization reactor used in the polymerization step 1-b is a reactor including a gas dispersion plate. Propylene and hydrogen were continuously supplied from the lowermost side of the gas-phase polymerization reactor. In this way, a fluidized bed was formed in each reaction zone of multiple stages, the amounts of propylene and hydrogen supplied were controlled so as to keep constant the gas composition and the pressure, and propylene was further subjected to homopolymerization while the excess gas was purged. At this time, the antioxidant contact product B was continuously supplied so that pentaerythritol tetrakis[3-(3',5'-di-tert-butyl-4'-hydroxyphenyl)propionate] contained in the heterophasic propylene polymerization material (X2) was 0.045 phr and tris(2,4-di-t-butylphenyl)phosphite contained therein was 0.090 phr. The reaction conditions were as follows.

- Polymerization temperature: 80°C
- Polymerization pressure: 1.94 MPa (gauge pressure)
- Gas concentration ratio (hydrogen/(hydrogen + propylene)): 9.1 mol%

The intrinsic viscosity [η]I of the product (polymer (I)) sampled from the outlet of the gas-phase polymerization reactor was 0.86 dL/g.

[Polymerization Step 2] (Propylene-Ethylene Copolymerization by Using Gas Phase Polymerization Reactor (Gas Phase Polymerization))

The polymer (I) discharged from the gas-phase polymerization reactor used in the polymerization step 1-b was further continuously supplied to a subsequent gas phase polymerization reactor. The gas-phase polymerization reactor used in the polymerization step 2 is a reactor including a gas dispersion plate. Propylene, ethylene, and hydrogen were continuously supplied to the gas phase polymerization reactor as configured above. While the gas supply amount was adjusted so as to keep constant the gas composition and the pressure and the excess gas was purged, propylene and ethylene were subjected to copolymerization in the presence of the polymer (I) (particles). In this way, an ethylene-propylene copolymer, namely a polymer (II), was generated. Then, a heterophasic propylene polymerization material, which was a mixture of the polymer(I) and the polymer (II), was obtained. The reaction conditions were as follows.

- Polymerization temperature: 70°C
- Polymerization pressure: 1.25 MPa (gauge pressure)
- Gas concentration ratio (ethylene/(propylene + ethylene)): 20.1 mol%
  (hydrogen/(hydrogen + propylene + ethylene)): 0.26 mol%
- Amount of tetraethoxysilane supplied: 26.3 mmol/hour

The intrinsic viscosity [η]whole of the product (heterophasic propylene polymerization material) sampled from the outlet of the gas-phase polymerization reactor was 1.72 dL/g.

The obtained heterophasic propylene polymerization material (X2) had a cold xylene soluble component amount CXS of 11.6 mass%. The heterophasic propylene polymerization material (X2) had an ethylene structural unit content of 5.8 mass% and a propylene monomer structural content of 94.2 mass%. In addition, the content of the polymer (II) was 17.1 mass%. The polymer (II) had an ethylene structural unit content of 33.9 mass%, and had an intrinsic viscosity [η]II of 5.88 dL/g. The propylene-based polymer (I) had an isotactic pentad fraction of 0.983.

The obtained heterophasic propylene polymerization material (X2) was subjected to a kneading deterioration

test, and the time required for the torque value to decrease by 15% based on the torque value after 5 minutes from the start of kneading was 73 minutes.

<Example X3>

To synthesize heterophasic propylene polymerization material (X3)

[Prepolymerization]

To a stainless steel (SUS) autoclave having an internal volume of 2 L and equipped with a stirrer were added 1.8 L of sufficiently dehydrated and degassed n-hexane, 53 mmol of triethylaluminum (organoaluminum compound), and 5.3 mmol of tert-butyl-n-propyl-dimethoxysilane. To the autoclave was added 17 g of the olefin polymerization-use solid catalyst component (2). Then, prepolymerization was performed by continuously supplying 17 g of propylene over about 30 minutes while maintaining the temperature of the autoclave at about 10°C. After that, the obtained slurry was transferred to an SUS316L autoclave having an internal volume of 160 L and equipped with a stirrer to prepare a slurry further containing 131 L of liquid butane.

[Main Polymerization]

<Polymerization Step 1-a1> (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry containing propylene, hydrogen, triethylaluminum (organoaluminum compound), tert-butyl-n-propyl-dimethoxysilane, and the above-described prepolymerization catalyst component as obtained in the prepolymerization step was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 18 L
- Propylene supply rate: 30 kg/hour
- Hydrogen supply rate: 192 NL/hour
- Prepolymerization slurry supply rate (converted to the olefin polymerization-use solid catalyst component): 0.50 g/hour
- Triethylaluminum (organoaluminum compound) supply rate: 28.9 mmol/hour
- Tert-butyl-n-propyl-dimethoxysilane supply rate: 8.6 mmol/hour
- Polymerization pressure: 4.12 MPa (gauge pressure)

[Polymerization Step 1-a2] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a1 was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 44 L
- Propylene supply rate: 32 kg/hour
- Hydrogen supply rate: 192 NL/hour
- Polymerization pressure: 3.82 MPa (gauge pressure)

[Polymerization Step 1-a3] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a2 was continuously supplied to a slurry polymerization reactor to perform a polymerization reaction. The reaction conditions were as follows.

- Polymerization temperature: 67°C

- Stirring speed: 150 rpm
- Liquid level of the slurry polymerization reactor: 44 L
- Propylene supply rate: 3 kg/hour
- Polymerization pressure: 3.51 MPa (gauge pressure)

[Polymerization Step 1-b] (Homopolymerization (Gas Phase Polymerization) of Propylene by Using Gas Phase Polymerization Reactor (Gas Phase Polymerization))

The slurry obtained in the polymerization step 1-a3 was further continuously supplied to a subsequent gas-phase polymerization reactor. The gas-phase polymerization reactor used in the polymerization step 1-b is a reactor including a gas dispersion plate. Propylene and hydrogen were continuously supplied from the lowermost side of the gas-phase polymerization reactor. In this way, a fluidized bed was formed in each reaction zone of multiple stages, the amounts of propylene and hydrogen supplied were controlled so as to keep constant the gas composition and the pressure, and propylene was further subjected to homopolymerization while the excess gas was purged. At this time, the antioxidant contact product B was continuously supplied so that pentaerythritol tetrakis[3-(3',5'-di-tert-butyl-4'-hydroxyphenyl)propionate] contained in the heterophasic propylene polymerization material (X3) was 0.034 phr and tris(2,4-di-t-butylphenyl)phosphite contained therein was 0.068 phr. The reaction conditions were as follows.

- Polymerization temperature: 80°C
- Polymerization pressure: 1.94 MPa (gauge pressure)
- Gas concentration ratio (hydrogen/(hydrogen + propylene)): 9.0 mol%

The intrinsic viscosity [η]I of the product (polymer (I)) sampled from the outlet of the gas-phase polymerization reactor was 0.90 dL/g.

[Polymerization Step 2] (Propylene-Ethylene Copolymerization by Using Gas Phase Polymerization Reactor (Gas Phase Polymerization))

The polymer (I) discharged from the gas-phase polymerization reactor used in the polymerization step 1-b was further continuously supplied to a subsequent gas phase polymerization reactor. The gas-phase polymerization reactor used in the polymerization step 2 is a reactor including a gas dispersion plate. Propylene, ethylene, and hydrogen were continuously supplied to the gas phase polymerization reactor as configured above. While the gas supply amount was adjusted so as to keep constant the gas composition and the pressure and the excess gas was purged, propylene and ethylene were subjected to copolymerization in the presence of the polymer (I) (particles). In this way, an ethylene-propylene copolymer, namely a polymer (II), was generated. Then, a heterophasic propylene polymerization material, which was a mixture of the polymer(I) and the polymer (II), was obtained. The reaction conditions were as follows.

- Polymerization temperature: 70°C
- Polymerization pressure: 1.25 MPa (gauge pressure)
- Gas concentration ratio (ethylene/(propylene + ethylene)): 20.0 mol%
  (hydrogen/(hydrogen + propylene + ethylene)): 0.24 mol%
- Amount of tetraethoxysilane supplied: 26.0 mmol/hour

The intrinsic viscosity [η]whole of the product (heterophasic propylene polymerization material) sampled from the outlet of the gas-phase polymerization reactor was 1.77 dL/g.

The obtained heterophasic propylene polymerization material (X3) had a cold xylene soluble component amount CXS of 12.8 mass%. The heterophasic propylene polymerization material (X3) had an ethylene structural unit content of 5.4 mass% and a propylene structural unit content of 94.6 mass%. In addition, the content of the polymer (II) was 16.9 mass%. The polymer (II) had an ethylene structural unit content of 31.9 mass%, and had an intrinsic viscosity [η]II of 6.04 dL/g. The propylene-based polymer (I) had an isotactic pentad fraction of 0.983.

The obtained heterophasic propylene polymerization material (X3) was subjected to a kneading deterioration test, and the time required for the torque value to decrease by 15% based on the torque value after 5 minutes from the start of kneading was 57 minutes.

<Example X4>

To synthesize heterophasic propylene polymerization material (X4)

[Prepolymerization]

To a stainless steel (SUS) autoclave having an internal volume of 2 L and equipped with a stirrer were added 1.8 L of sufficiently dehydrated and degassed n-hexane, 53 mmol of triethylaluminum (organoaluminum compound), and 5.3 mmol of tert-butyl-n-propyl-dimethoxysilane. To the autoclave was added 17 g of the olefin polymerization-use solid catalyst component (2). Then, prepolymerization was performed by continuously supplying 17 g of propylene over about 30 minutes while maintaining the temperature of the autoclave at about 10°C. After that, the obtained slurry was transferred to an SUS316L autoclave having an internal volume of 160 L and equipped with a stirrer to prepare a slurry further containing 131 L of liquid butane.

[Main Polymerization]

<Polymerization Step 1-a1> (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry containing propylene, hydrogen, triethylaluminum (organoaluminum compound), *tert*-butyl-n-propyl-dimethoxysilane, and the above-described prepolymerization catalyst component as obtained in the prepolymerization step was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 18 L
- Propylene supply rate: 30 kg/hour
- Hydrogen supply rate: 192 NL/hour
- Prepolymerization slurry supply rate (converted to the olefin polymerization-use solid catalyst component): 0.50 g/hour
- Triethylaluminum (organoaluminum compound) supply rate: 30.3 mmol/hour
- Amount of *tert*-butyl-n-propyl-dimethoxysilane (silicon compound T) supplied: 9.0 mmol/hour
- Polymerization pressure: 4.07 MPa (gauge pressure)

[Polymerization Step 1-a2] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a1 was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 44 L
- Propylene supply rate: 32 kg/hour
- Hydrogen supply rate: 192 NL/hour
- Polymerization pressure: 3.80 MPa (gauge pressure)

[Polymerization Step 1-a3] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a2 was continuously supplied to a slurry polymerization reactor to perform a polymerization reaction. The reaction conditions were as follows.

- Polymerization temperature: 67°C
- Stirring speed: 150 rpm
- Liquid level of the slurry polymerization reactor: 44 L
- Propylene supply rate: 3 kg/hour

- Polymerization pressure: 3.48 MPa (gauge pressure)

[Polymerization Step 1-b] (Homopolymerization (Gas Phase Polymerization) of Propylene by Using Gas Phase Polymerization Reactor (Gas Phase Polymerization))

The slurry obtained in the polymerization step 1-a3 was further continuously supplied to a subsequent gas-phase polymerization reactor. The gas-phase polymerization reactor used in the polymerization step 1-b is a reactor including a gas dispersion plate. Propylene and hydrogen were continuously supplied from the lowermost side of the gas-phase polymerization reactor. In this way, a fluidized bed was formed in each reaction zone of multiple stages, the amounts of propylene and hydrogen supplied were controlled so as to keep constant the gas composition and the pressure, and propylene was further subjected to homopolymerization while the excess gas was purged. At this time, the antioxidant contact product B was continuously supplied so that pentaerythritol tetrakis[3-(3',5'-di-tert-butyl-4'-hydroxyphenyl)propionate] contained in the heterophasic propylene polymerization material (X4) was 0.025 phr and tris(2,4-di-t-butylphenyl)phosphite contained therein was 0.050 phr. The reaction conditions were as follows.

- Polymerization temperature: 80°C
- Polymerization pressure: 1.95 MPa (gauge pressure)
- Gas concentration ratio (hydrogen/(hydrogen + propylene)): 9.1 mol%

The intrinsic viscosity [η]I of the product (polymer (I)) sampled from the outlet of the gas-phase polymerization reactor was 0.89 dL/g.

[Polymerization Step 2] (Propylene-Ethylene Copolymerization by Using Gas Phase Polymerization Reactor (Gas Phase Polymerization))

The polymer (I) discharged from the gas-phase polymerization reactor used in the polymerization step 1-b was further continuously supplied to a subsequent gas phase polymerization reactor. The gas-phase polymerization reactor used in the polymerization step 2 is a reactor including a gas dispersion plate. Propylene, ethylene, and hydrogen were continuously supplied to the gas phase polymerization reactor as configured above. While the gas supply amount was adjusted so as to keep constant the gas composition and the pressure and the excess gas was purged, propylene and ethylene were subjected to copolymerization in the presence of the polymer (I) (particles). In this way, an ethylene-propylene copolymer, namely a polymer (II), was generated. Then, a heterophasic propylene polymerization material, which was a mixture of the polymer(I) and the polymer (II), was obtained. The reaction conditions were as follows.

- Polymerization temperature: 70°C
- Polymerization pressure: 1.25 MPa (gauge pressure)
- Gas concentration ratio (ethylene/(propylene + ethylene)): 20.1 mol%
  (hydrogen/(hydrogen + propylene + ethylene)): 0.25 mol%
- Amount of tetraethoxysilane supplied: 26.6 mmol/hour

The intrinsic viscosity [η]whole of the product (heterophasic propylene polymerization material) sampled from the outlet of the gas-phase polymerization reactor was 1.87 dL/g.

The obtained heterophasic propylene polymerization material (X4) had a cold xylene soluble component amount CXS of 12.5 mass%. The heterophasic propylene polymerization material (X4) had an ethylene structural unit content of 6.0 mass% and a propylene structural unit content of 94.0 mass%. In addition, the content of the polymer (II) was 18.9 mass%. The polymer (II) had an ethylene structural unit content of 31.7 mass%, and had an intrinsic viscosity [η]II of 6.07 dL/g. The propylene-based polymer (I) had an isotactic pentad fraction of 0.983.

The obtained heterophasic propylene polymerization material (X4) was subjected to a kneading deterioration test, and the time required for the torque value to decrease by 15% based on the torque value after 5 minutes from the start of kneading was 40 minutes.

<Example X5>

To synthesize heterophasic propylene polymerization material (X5)

[Prepolymerization]

To a stainless steel (SUS) autoclave having an internal volume of 2 L and equipped with a stirrer were added

1.7 L of sufficiently dehydrated and degassed n-hexane, 42 mmol of triethylaluminum (organoaluminum compound), and 4.2 mmol of *tert*-butyl-n-propyl-dimethoxysilane. To the autoclave was added 13 g of the olefin polymerization-use solid catalyst component (1). Then, prepolymerization was performed by continuously supplying 13 g of propylene over about 30 minutes while maintaining the temperature of the autoclave at about 10°C. After that, the obtained slurry was transferred to an SUS316L autoclave having an internal volume of 160 L and equipped with a stirrer to prepare a slurry further containing 130 L of liquid butane.

[Main Polymerization]

<Polymerization Step 1-a1> (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry containing propylene, hydrogen, triethylaluminum (organoaluminum compound), *tert*-butyl-n-propyl-dimethoxysilane, and the above-described prepolymerization catalyst component as obtained in the prepolymerization step was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 18 L
- Propylene supply rate: 40 kg/hour
- Hydrogen supply rate:199 NL/hour
- Prepolymerization slurry supply rate (converted to the olefin polymerization-use solid catalyst component): 0.52 g/hour
- Triethylaluminum (organoaluminum compound) supply rate: 29.0 mmol/hour
- Tert-butyl-n-propyl-dimethoxysilane supply rate: 8.3 mmol/hour
- Polymerization pressure: 3.94 MPa (gauge pressure)

[Polymerization Step 1-a2] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a1 was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 44 L
- Propylene supply rate: 40 kg/hour
- Hydrogen supply rate: 177 NL/hour
- Polymerization pressure: 3.45 MPa (gauge pressure)

[Polymerization Step 1-b] (Homopolymerization (Gas Phase Polymerization) of Propylene by Using Gas Phase Polymerization Reactor (Gas Phase Polymerization))

The slurry obtained in the polymerization step 1-a2 was further continuously supplied to a subsequent gas-phase polymerization reactor. The gas-phase polymerization reactor used in the polymerization step 1-b is a reactor including a gas dispersion plate. Propylene and hydrogen were continuously supplied from the lowermost side of the gas-phase polymerization reactor. In this way, a fluidized bed was formed in each reaction zone of multiple stages, the amounts of propylene and hydrogen supplied were controlled so as to keep constant the gas composition and the pressure, and propylene was further subjected to homopolymerization while the excess gas was purged. The reaction conditions were as follows.

- Polymerization temperature: 80°C
- Polymerization pressure: 1.94 MPa (gauge pressure)
- Gas concentration ratio (hydrogen/(hydrogen + propylene)): 9.3 mol%

The intrinsic viscosity [η]I of the product (polymer (I)) sampled from the outlet of the gas-phase polymerization reactor was 0.87 dL/g.

[Polymerization Step 2] (Propylene-Ethylene Copolymerization by Using Gas Phase Polymerization Reactor (Gas Phase Polymerization))

The polymer (I) discharged from the gas-phase polymerization reactor used in the polymerization step 1-b was further continuously supplied to a subsequent gas phase polymerization reactor. The gas-phase polymerization reactor used in the polymerization step 2 is a reactor including a gas dispersion plate. Propylene, ethylene, and hydrogen were continuously supplied to the gas phase polymerization reactor as configured above. While the gas supply amount was adjusted so as to keep constant the gas composition and the pressure and the excess gas was purged, propylene and ethylene were subjected to copolymerization in the presence of the polymer (I) (particles). In this way, an ethylene-propylene copolymer, namely a polymer (II), was generated. Then, a heterophasic propylene polymerization material, which was a mixture of the polymer(I) and the polymer (II), was obtained. At this time, the antioxidant contact product A was continuously supplied so that pentaerythritol tetrakis[3-(3',5'-di-tert-butyl-4'-hydroxyphenyl)propionate] contained in the heterophasic propylene polymerization material (X5) was 0.05 phr and tris(2,4-di-t-butylphenyl)phosphite contained therein was 0.10 phr. The reaction conditions were as follows.

- Polymerization temperature: 70°C
- Polymerization pressure: 1.10 MPa (gauge pressure)
- Gas concentration ratio (ethylene/(propylene + ethylene)): 25.3 mol%

(hydrogen/(hydrogen + propylene + ethylene)): 0.38 mol%

The intrinsic viscosity [η]whole of the product (heterophasic propylene polymerization material) sampled from the outlet of the gas-phase polymerization reactor was 1.48 dL/g.

The obtained heterophasic propylene polymerization material (X5) had a cold xylene soluble component amount CXS of 9.3 mass%. The heterophasic propylene polymerization material (X5) had an ethylene structural unit content of 3.9 mass% and a propylene structural unit content of 96.1 mass%. In addition, the content of the polymer (II) was 14.4 mass%. The polymer (II) had an ethylene structural unit content of 27.0 mass%, and had an intrinsic viscosity [η]II of 5.09 dL/g. The polymer (I) had an isotactic pentad fraction of 0.984.

The obtained heterophasic propylene polymerization material (X5) was subjected to a kneading deterioration test, and the time required for the torque value to decrease by 15% based on the torque value after 5 minutes from the start of kneading was 40 minutes.

<Example X6>

To synthesize heterophasic propylene polymerization material (X6)

[Prepolymerization]

To a stainless steel (SUS) autoclave having an internal volume of 2 L and equipped with a stirrer were added 1.7 L of sufficiently dehydrated and degassed n-hexane, 42 mmol of triethylaluminum (organoaluminum compound), and 4.2 mmol of tert-butyl-n-propyl-dimethoxysilane. To the autoclave was added 13 g of the olefin polymerization-use solid catalyst component (2). Then, prepolymerization was performed by continuously supplying 13 g of propylene over about 30 minutes while maintaining the temperature of the autoclave at about 10°C. After that, the obtained slurry was transferred to an SUS316L autoclave having an internal volume of 160 L and equipped with a stirrer to prepare a slurry further containing 130 L of liquid butane.

[Main Polymerization]

<Polymerization Step 1-a1> (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry containing propylene, hydrogen, triethylaluminum (organoaluminum compound), tert-butyl-n-propyl-dimethoxysilane, and the above-described prepolymerization catalyst component as obtained in the prepolymerization step was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 18 L

- Propylene supply rate: 40 kg/hour
- Hydrogen supply rate: 202 NL/hour
- Prepolymerization slurry supply rate (converted to the olefin polymerization-use solid catalyst component): 0.52 g/hour
- Triethylaluminum (organoaluminum compound) supply rate: 29.1 mmol/hour
- Amount of *tert*-butyl-n-propyl-dimethoxysilane (silicon compound T) supplied: 8.0 mmol/hour
- Polymerization pressure: 3.95 MPa (gauge pressure)

[Polymerization Step 1-a2] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a1 was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 44 L
- Propylene supply rate: 40 kg/hour
- Hydrogen supply rate: 176 NL/hour
- Polymerization pressure: 3.44 MPa (gauge pressure)

[Polymerization Step 1-b] (Homopolymerization (Gas Phase Polymerization) of Propylene by Using Gas Phase Polymerization Reactor (Gas Phase Polymerization))

The slurry obtained in the polymerization step 1-a2 was further continuously supplied to a subsequent gas-phase polymerization reactor. The gas-phase polymerization reactor used in the polymerization step 1-b is a reactor including a gas dispersion plate. Propylene and hydrogen were continuously supplied from the lowermost side of the gas-phase polymerization reactor. In this way, a fluidized bed was formed in each reaction zone of multiple stages, the amounts of propylene and hydrogen supplied were controlled so as to keep constant the gas composition and the pressure, and propylene was further subjected to homopolymerization while the excess gas was purged. The reaction conditions were as follows.

- Polymerization temperature: 80°C
- Polymerization pressure: 1.95 MPa (gauge pressure)
- Gas concentration ratio (hydrogen/(hydrogen + propylene)): 9.3 mol%

The intrinsic viscosity [η]I of the product (polymer (I)) sampled from the outlet of the gas-phase polymerization reactor was 0.87 dL/g.

[Polymerization Step 2] (Propylene-Ethylene Copolymerization by Using Gas Phase Polymerization Reactor (Gas Phase Polymerization))

The polymer (I) discharged from the gas-phase polymerization reactor used in the polymerization step 1-b was further continuously supplied to a subsequent gas phase polymerization reactor. The gas-phase polymerization reactor used in the polymerization step 2 is a reactor including a gas dispersion plate. Propylene, ethylene, and hydrogen were continuously supplied to the gas phase polymerization reactor as configured above. While the gas supply amount was adjusted so as to keep constant the gas composition and the pressure and the excess gas was purged, propylene and ethylene were subjected to copolymerization in the presence of the polymer (I) (particles). In this way, an ethylene-propylene copolymer, namely a polymer (II), was generated. Then, a heterophasic propylene polymerization material, which was a mixture of the polymer(I) and the polymer (II), was obtained. At this time, the antioxidant contact product A was continuously supplied so that pentaerythritol tetrakis[3-(3',5'-di-tert-butyl-4'-hydroxyphenyl)propionate] contained in the heterophasic propylene polymerization material (X6) was 0.035 phr and tris(2,4-di-t-butylphenyl)phosphite contained therein was 0.07 phr. The reaction conditions were as follows.

- Polymerization temperature: 70°C
- Polymerization pressure: 1.10 MPa (gauge pressure)
- Gas concentration ratio (ethylene/(propylene + ethylene)): 25.0 mol%

(hydrogen/(hydrogen + propylene + ethylene)): 0.37 mol%

The intrinsic viscosity [η]whole of the product (heterophasic propylene polymerization material) sampled from the outlet of the gas-phase polymerization reactor was 1.50 dL/g.

The obtained heterophasic propylene polymerization material (X6) had a cold xylene soluble component amount CXS of 10.0 mass%. The heterophasic propylene polymerization material (X6) had an ethylene structural unit content of 3.7 mass% and a propylene structural unit content of 96.3 mass%. In addition, the content of the polymer (II) was 10.8 mass%. The polymer (II) had an ethylene structural unit content of 34.2 mass%, and had an intrinsic viscosity [η]II of 6.69 dL/g. The polymer (I) had an isotactic pentad fraction of 0.984.

The obtained heterophasic propylene polymerization material (X6) was subjected to a kneading deterioration test, and the time required for the torque value to decrease by 15% based on the torque value after 5 minutes from the start of kneading was 24 minutes.

<Example X7>

To synthesize heterophasic propylene polymerization material (X7)

[Prepolymerization]

To a stainless steel (SUS) autoclave having an internal volume of 2 L and equipped with a stirrer were added 1.7 L of sufficiently dehydrated and degassed n-hexane, 42 mmol of triethylaluminum (organoaluminum compound), and 4.2 mmol of tert-butyl-n-propyl-dimethoxysilane. To the autoclave was added 13 g of the olefin polymerization-use solid catalyst component (2). Then, prepolymerization was performed by continuously supplying 13 g of propylene over about 30 minutes while maintaining the temperature of the autoclave at about 10°C. After that, the obtained slurry was transferred to an SUS316L autoclave having an internal volume of 160 L and equipped with a stirrer to prepare a slurry further containing 130 L of liquid butane.

[Main Polymerization]

<Polymerization Step 1-a1> (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry containing propylene, hydrogen, triethylaluminum (organoaluminum compound), *tert*-butyl-n-propyl-dimethoxysilane, and the above-described prepolymerization catalyst component as obtained in the prepolymerization step was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 18 L
- Propylene supply rate: 40 kg/hour
- Hydrogen supply rate:199 NL/hour
- Prepolymerization slurry supply rate (converted to the olefin polymerization-use solid catalyst component): 0.51 g/hour
- Triethylaluminum (organoaluminum compound) supply rate: 29.4 mmol/hour
- Tert-butyl-n-propyl-dimethoxysilane supply rate: 8.2 mmol/hour
- Polymerization pressure: 3.95 MPa (gauge pressure)

[Polymerization Step 1-a2] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a1 was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 44 L
- Propylene supply rate: 40 kg/hour
- Hydrogen supply rate: 177 NL/hour

- Polymerization pressure: 3.45 MPa (gauge pressure)

[Polymerization Step 1-b] (Homopolymerization (Gas Phase Polymerization) of Propylene by Using Gas Phase Polymerization Reactor (Gas Phase Polymerization))

The slurry obtained in the polymerization step 1-a2 was further continuously supplied to a subsequent gas-phase polymerization reactor. The gas-phase polymerization reactor used in the polymerization step 1-b is a reactor including a gas dispersion plate. Propylene and hydrogen were continuously supplied from the lowermost side of the gas-phase polymerization reactor. In this way, a fluidized bed was formed in each reaction zone of multiple stages, the amounts of propylene and hydrogen supplied were controlled so as to keep constant the gas composition and the pressure, and propylene was further subjected to homopolymerization while the excess gas was purged. The reaction conditions were as follows.

- Polymerization temperature: 80°C
- Polymerization pressure: 1.95 MPa (gauge pressure)
- Gas concentration ratio (hydrogen/(hydrogen + propylene)): 9.3 mol%

The intrinsic viscosity [η]I of the product (polymer (I)) sampled from the outlet of the gas-phase polymerization reactor was 0.86 dL/g.

[Polymerization Step 2] (Propylene-Ethylene Copolymerization by Using Gas Phase Polymerization Reactor (Gas Phase Polymerization))

The polymer (I) discharged from the gas-phase polymerization reactor used in the polymerization step 1-b was further continuously supplied to a subsequent gas phase polymerization reactor. The gas-phase polymerization reactor used in the polymerization step 2 is a reactor including a gas dispersion plate. Propylene, ethylene, and hydrogen were continuously supplied to the gas phase polymerization reactor as configured above. While the gas supply amount was adjusted so as to keep constant the gas composition and the pressure and the excess gas was purged, propylene and ethylene were subjected to copolymerization in the presence of the polymer (I) (particles). In this way, an ethylene-propylene copolymer, namely a polymer (II), was generated. Then, a heterophasic propylene polymerization material, which was a mixture of the polymer(I) and the polymer (II), was obtained. At this time, the antioxidant contact product A was continuously supplied so that pentaerythritol tetrakis[3-(3',5'-di-tert-butyl-4'-hydroxyphenyl)propionate] contained in the heterophasic propylene polymerization material (X7) was 0.025 phr and tris(2,4-di-t-butylphenyl)phosphite contained therein was 0.05 phr. The reaction conditions were as follows.

- Polymerization temperature: 70°C
- Polymerization pressure: 1.10 MPa (gauge pressure)
- Gas concentration ratio (ethylene/(propylene + ethylene)): 25.0 mol%

(hydrogen/(hydrogen + propylene + ethylene)): 0.37 mol%

The intrinsic viscosity [η]whole of the product (heterophasic propylene polymerization material) sampled from the outlet of the gas-phase polymerization reactor was 1.45 dL/g.

The obtained heterophasic propylene polymerization material (X7) had a cold xylene soluble component amount CXS of 9.4 mass%. The heterophasic propylene polymerization material (X7) had an ethylene structural unit content of 3.8 mass% and a propylene structural unit content of 96.2 mass%. In addition, the content of the polymer (II) was 14.5 mass%. The polymer (II) had an ethylene structural unit content of 26.2 mass%, and had an intrinsic viscosity [η]II of 4.93 dL/g. The polymer (I) had an isotactic pentad fraction of 0.985.

The obtained heterophasic propylene polymerization material (X7) was subjected to a kneading deterioration test, and the time required for the torque value to decrease by 15% based on the torque value after 5 minutes from the start of kneading was 24 minutes.

<Comparative Example C4>

To synthesize heterophasic propylene polymerization material (C4)

[Prepolymerization]

To a stainless steel (SUS) autoclave having an internal volume of 2 L and equipped with a stirrer were added

1.8 L of sufficiently dehydrated and degassed n-hexane, 53 mmol of triethylaluminum (organoaluminum compound), and 5.3 mmol of *tert*-butyl-n-propyl-dimethoxysilane. To the autoclave was added 17 g of the olefin polymerization-use solid catalyst component (1). Then, prepolymerization was performed by continuously supplying 17 g of propylene over about 30 minutes while maintaining the temperature of the autoclave at about 10°C. After that, the obtained slurry was transferred to an SUS316L autoclave having an internal volume of 160 L and equipped with a stirrer to prepare a slurry further containing 131 L of liquid butane.

[Main Polymerization]

<Polymerization Step 1-a1> (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry containing propylene, hydrogen, triethylaluminum (organoaluminum compound), *tert*-butyl-n-propyl-dimethoxysilane, and the above-described prepolymerization catalyst component as obtained in the prepolymerization step was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 18 L
- Propylene supply rate: 30 kg/hour
- Hydrogen supply rate: 192 NL/hour
- Prepolymerization slurry supply rate (converted to the olefin polymerization-use solid catalyst component): 0.50 g/hour
- Triethylaluminum (organoaluminum compound) supply rate: 30.2 mmol/hour
- Tert-butyl-n-propyl-dimethoxysilane supply rate: 8.6 mmol/hour
- Polymerization pressure: 4.06 MPa (gauge pressure)

[Polymerization Step 1-a2] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a1 was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 44 L
- Propylene supply rate: 32 kg/hour
- Hydrogen supply rate: 192 NL/hour
- Polymerization pressure: 3.76 MPa (gauge pressure)

[Polymerization Step 1-a3] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a2 was continuously supplied to a slurry polymerization reactor to perform a polymerization reaction. The reaction conditions were as follows.

- Polymerization temperature: 67°C
- Stirring speed: 150 rpm
- Liquid level of the slurry polymerization reactor: 44 L
- Propylene supply rate: 3 kg/hour
- Polymerization pressure: 3.47 MPa (gauge pressure)

[Polymerization Step 1-b] (Homopolymerization (Gas Phase Polymerization) of Propylene by Using Gas Phase Polymerization Reactor (Gas Phase Polymerization))

The slurry obtained in the polymerization step 1-a3 was further continuously supplied to a subsequent gas-phase polymerization reactor. The gas-phase polymerization reactor used in the polymerization step 1-b is a reactor

including a gas dispersion plate. Propylene and hydrogen were continuously supplied from the lowermost side of the gas-phase polymerization reactor. In this way, a fluidized bed was formed in each reaction zone of multiple stages, the amounts of propylene and hydrogen supplied were controlled so as to keep constant the gas composition and the pressure, and propylene was further subjected to homopolymerization while the excess gas was purged. The reaction conditions were as follows.

- Polymerization temperature: 80°C
- Polymerization pressure: 1.95 MPa (gauge pressure)
- Gas concentration ratio (hydrogen/(hydrogen + propylene)): 9.0 mol%

The intrinsic viscosity [η]I of the product (polymer (I)) sampled from the outlet of the gas-phase polymerization reactor was 0.89 dL/g.

[Polymerization Step 2] (Propylene-Ethylene Copolymerization by Using Gas Phase Polymerization Reactor (Gas Phase Polymerization))

The polymer (I) discharged from the gas-phase polymerization reactor used in the polymerization step 1-b was further continuously supplied to a subsequent gas phase polymerization reactor. The gas-phase polymerization reactor used in the polymerization step 2 is a reactor including a gas dispersion plate. Propylene, ethylene, and hydrogen were continuously supplied to the gas phase polymerization reactor as configured above. While the gas supply amount was adjusted so as to keep constant the gas composition and the pressure and the excess gas was purged, propylene and ethylene were subjected to copolymerization in the presence of the polymer (I) (particles). In this way, an ethylene-propylene copolymer, namely a polymer (II), was generated. Then, a heterophasic propylene polymerization material, which was a mixture of the polymer(I) and the polymer (II), was obtained. The reaction conditions were as follows.

- Polymerization temperature: 70°C
- Polymerization pressure: 1.25 MPa (gauge pressure)
- Gas concentration ratio (ethylene/(propylene + ethylene)): 20.2 mol%
  (hydrogen/(hydrogen + propylene + ethylene)): 0.24 mol%
- Amount of tetraethoxysilane supplied: 26.4 mmol/hour

The intrinsic viscosity [η]whole of the product (heterophasic propylene polymerization material) sampled from the outlet of the gas-phase polymerization reactor was 1.67 dL/g.

The obtained heterophasic propylene polymerization material (C4) had a cold xylene soluble component amount CXS of 11.8 mass%. The heterophasic propylene polymerization material (C4) had an ethylene structural unit content of 4.6 mass% and a propylene structural unit content of 95.4 mass%. In addition, the content of the polymer (II) was 15.2 mass%. The polymer (II) had an ethylene structural unit content of 30.2 mass%, and had an intrinsic viscosity [η]II of 6.02 dL/g. The polymer (I) had an isotactic pentad fraction of 0.985.

The obtained heterophasic propylene polymerization material (C4) was subjected to a kneading deterioration test, and the time required for the torque value to decrease by 15% based on the torque value after 5 minutes from the start of kneading was 11 minutes.

<Comparative Example C6>

To synthesize heterophasic propylene polymerization material (C6)

[Prepolymerization]

To a stainless steel (SUS) autoclave having an internal volume of 2 L and equipped with a stirrer were added 1.7 L of sufficiently dehydrated and degassed n-hexane, 42 mmol of triethylaluminum (organoaluminum compound), and 4.2 mmol of *tert*-butyl-n-propyl-dimethoxysilane. To the autoclave was added 13 g of the olefin polymerization-use solid catalyst component (1). Then, prepolymerization was performed by continuously supplying 13 g of propylene over about 30 minutes while maintaining the temperature of the autoclave at about 10°C. After that, the obtained slurry was transferred to an SUS316L autoclave having an internal volume of 160 L and equipped with a stirrer to prepare a slurry further containing 130 L of liquid butane.

[Main Polymerization]

<Polymerization Step 1-a1> (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry containing propylene, hydrogen, triethylaluminum (organoaluminum compound), *tert*-butyl-n-propyl-dimethoxysilane, and the above-described prepolymerization catalyst component as obtained in the prepolymerization step was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 18 L
- Propylene supply rate: 40 kg/hour
- Hydrogen supply rate:199 NL/hour
- Prepolymerization slurry supply rate (converted to the olefin polymerization-use solid catalyst component): 0.51 g/hour
- Triethylaluminum (organoaluminum compound) supply rate: 28.3 mmol/hour
- Tert-butyl-n-propyl-dimethoxysilane supply rate: 8.3 mmol/hour
- Polymerization pressure: 3.95 MPa (gauge pressure)

[Polymerization Step 1-a2] (Homopolymerization of Propylene by Using Slurry Polymerization Reactor)

Propylene was subjected to homopolymerization using a vessel-type slurry polymerization reactor made of SUS304 and equipped with a stirrer. Specifically, the slurry obtained in the polymerization step 1-a1 was continuously supplied to a slurry polymerization reactor to perform a polymerization reaction. The reaction conditions were as follows.

- Polymerization temperature: 70°C
- Stirring speed: 150 rpm
- Liquid level of the slurry polymerization reactor: 44 L
- Propylene supply rate: 40 kg/hour
- Hydrogen supply rate: 177 NL/hour
- Polymerization pressure: 3.46 MPa (gauge pressure)

[Polymerization Step 1-b] (Homopolymerization (Gas Phase Polymerization) of Propylene by Using Gas Phase Polymerization Reactor (Gas Phase Polymerization))

The slurry obtained in the polymerization step 1-a2 was further continuously supplied to a subsequent gas-phase polymerization reactor. The gas-phase polymerization reactor used in the polymerization step 1-b is a reactor including a gas dispersion plate. Propylene and hydrogen were continuously supplied from the lowermost side of the gas-phase polymerization reactor. In this way, a fluidized bed was formed in each reaction zone of multiple stages, the amounts of propylene and hydrogen supplied were controlled so as to keep constant the gas composition and the pressure, and propylene was further subjected to homopolymerization while the excess gas was purged. The reaction conditions were as follows.

- Polymerization temperature: 80°C
- Polymerization pressure: 1.94 MPa (gauge pressure)
- Gas concentration ratio (hydrogen/(hydrogen + propylene)): 9.2 mol%

The intrinsic viscosity [η]I of the product (polymer (I)) sampled from the outlet of the gas-phase polymerization reactor was 0.87 dL/g.

[Polymerization Step 2] (Propylene-Ethylene Copolymerization by Using Gas Phase Polymerization Reactor (Gas Phase Polymerization))

The polymer (I) discharged from the gas-phase polymerization reactor used in the polymerization step 1-b was further continuously supplied to a subsequent gas phase polymerization reactor. The gas-phase polymerization reactor used in the polymerization step 2 is a reactor including a gas dispersion plate. Propylene, ethylene, and hydrogen were

continuously supplied to the gas phase polymerization reactor as configured above. While the gas supply amount was adjusted so as to keep constant the gas composition and the pressure and the excess gas was purged, propylene and ethylene were subjected to copolymerization in the presence of the polymer (I) (particles). In this way, an ethylene-propylene copolymer, namely a polymer (II), was generated. Then, a heterophasic propylene polymerization material, which was a mixture of the polymer(I) and the polymer (II), was obtained. The reaction conditions were as follows.

- Polymerization temperature: 70°C
- Polymerization pressure: 1.10 MPa (gauge pressure)
- Gas concentration ratio (ethylene/(propylene + ethylene)): 24.9 mol%

(hydrogen/(hydrogen + propylene + ethylene)): 0.38 mol%

The intrinsic viscosity [η]whole of the product (heterophasic propylene polymerization material) sampled from the outlet of the gas-phase polymerization reactor was 1.44 dL/g.

The obtained heterophasic propylene polymerization material (C6) had a cold xylene soluble component amount CXS of 9.4 mass%. The heterophasic propylene polymerization material (C6) had an ethylene structural unit content of 3.8 mass% and a propylene structural unit content of 96.2 mass%. In addition, the content of the polymer (II) was 13.0 mass%. The polymer (II) had an ethylene structural unit content of 29.3 mass%, and had an intrinsic viscosity [η]II of 5.27 dL/g. The polymer (I) had an isotactic pentad fraction of 0.984.

The obtained heterophasic propylene polymerization material (C6) was subjected to a kneading deterioration test, and the time required for the torque value to decrease by 15% based on the torque value after 5 minutes from the start of kneading was 7 minutes.

Hereinafter, invention 2 will be exemplified.

<Example 1: To synthesize heterophasic propylene polymerization material (1)>

The inside of a stainless steel autoclave (hereinafter, referred to as an "autoclave 1") having an internal volume of 5 L and equipped with a stirrer was dried under reduced pressure. Thereafter, the gas in the autoclave 1 was replaced with argon gas and cooled. The inside of the autoclave 1 was then evacuated.

In a glass charger, heptane, triethylaluminum (aluminum compound) (1.25 mmol), tert-butyl-n-propyldimethoxysilane (0.08 mmol), and the olefin polymerization-use solid catalyst component (1) (13.1 mg) were brought into contact with one another. The resulting contact product was put into the autoclave 1. Thereafter, liquefied propylene (1170 g) was fed into the autoclave 1, and hydrogen gas (partial pressure: 0.15 MPa) was then supplied. After that, the temperature in the autoclave 1 was raised to 50°C to start polymerization. At 60 minutes after the start of polymerization, the unreacted gas was purged to the outside of the polymerization system. The intrinsic viscosity [η]I of the propylene-based polymer (polymer (I)) sampled was 0.78 dL/g.

In a glass charger, heptane, triethylaluminum (aluminum compound) (1.25 mmol), and pentaerythritol tetrakis[3-(3',5'-di-tert-butyl-4'-hydroxyphenyl)propionate] (an antioxidant represented by formula (1): the structural formula is described below) (0.30 g) were brought into contact with one another. The obtained contact product was charged into the autoclave 1 at an internal temperature of 40°C, and brought into contact with the polymer (I) that had already been polymerized in the autoclave 1, and hydrogen gas (partial pressure: 0.07 MPa) was then supplied.

After the autoclave 1 and an autoclave (hereinafter, referred to as an "autoclave 2") having an internal volume of 3 L were connected, the inside of the autoclave 2 was evacuated. Thereafter, propylene (370 g) and ethylene (180 g) were fed into the autoclave 2. The internal temperature of the autoclave 2 was raised to 90°C, the obtained mixed gas was continuously fed to the autoclave 1, and polymerization was performed at a polymerization pressure of 1.5 MPa and an internal temperature of 70°C for 35 minutes. After that, the gas in the autoclave 1 was purged to terminate the polymerization. The heterophasic propylene polymerization material thus produced was dried under reduced pressure at 70°C for 1 hour to prepare a heterophasic propylene polymerization material (1) (390 g).

The resulting heterophasic propylene polymerization material (1) had a BD of 0.458 $g/cm^3$.

The resulting heterophasic propylene polymerization material (1) had an intrinsic viscosity [η]whole of 1.57 dl/g. The resulting heterophasic propylene polymerization material (1) had a polymer (II) content of 55 mass%. In addition, the heterophasic propylene polymerization material (1) had an ethylene structural unit content of 23 mass%.

The resulting heterophasic propylene polymerization material (1) had an intrinsic viscosity [η]24h of 1.53 dl/g when stored for 24 hours in a gear oven at 100°C, had an intrinsic viscosity[η]50h of 1.54 dl/g when stored for 50 hours, and had an intrinsic viscosity[η]168h of 1.47 dl/g when stored for 168 hours. The results are shown in Table 2.

<Comparative Example 1: To synthesize heterophasic propylene polymerization material (C1)>

The inside of a stainless steel autoclave (hereinafter, referred to as an "autoclave 1") having an internal volume

of 5 L and equipped with a stirrer was dried under reduced pressure. Thereafter, the gas in the autoclave 1 was replaced with argon gas and cooled. The inside of the autoclave 1 was then evacuated.

In a glass charger, heptane, triethylaluminum (aluminum compound) (1.25 mmol), tert-butyl-n-propyldimethoxysilane (0.08 mmol), and the olefin polymerization-use solid catalyst component (1) (12.3 mg) were brought into contact with one another. The resulting contact product was put into the autoclave 1. Thereafter, liquefied propylene (1170 g) was fed into the autoclave 1, and hydrogen gas (partial pressure: 0.15 MPa) was then supplied. After that, the temperature in the autoclave 1 was raised to 50°C to start polymerization. At 60 minutes after the start of polymerization, the unreacted gas was purged to the outside of the polymerization system. The intrinsic viscosity [η]I of the propylene-based polymer (polymer (I)) sampled was 0.82 dL/g.

In a glass charger, heptane and triethylaluminum (aluminum compound) (1.25 mmol) were brought into contact. The resulting contact product was charged into the autoclave 1 having an internal temperature of 40°C, and hydrogen gas (partial pressure: 0.07 MPa) was then supplied. (In Comparative Example 1, no antioxidant was added.)

After the autoclave 1 and an autoclave (hereinafter, referred to as an "autoclave 2") having an internal volume of 3 L were connected, the inside of the autoclave 2 was evacuated. Thereafter, propylene (370 g) and ethylene (180 g) were fed into the autoclave 2. The internal temperature of the autoclave 2 was raised to 90°C, the obtained mixed gas was continuously fed to the autoclave 1, and polymerization was performed at a polymerization pressure of 1.5 MPa and an internal temperature of 70°C for 25 minutes. After that, the gas in the autoclave 1 was purged to terminate the polymerization. The heterophasic propylene polymerization material thus produced was dried under reduced pressure at 70°C for 1 hour to prepare a heterophasic propylene polymerization material (C1) (356 g).

The resulting heterophasic propylene polymerization material (C1) had a BD of 0.415 g/cm$^3$.

The resulting heterophasic propylene polymerization material (C1) had an intrinsic viscosity [η]whole of 1.38 dl/g. The resulting heterophasic propylene polymerization material (C1) had a polymer (II) content of 49 mass%. In addition, the heterophasic propylene polymerization material (C1) had an ethylene structural unit content of 20 mass%.

The resulting heterophasic propylene polymerization material (C1) had an intrinsic viscosity [η]24h of 1.31 dl/g when stored for 24 hours in a gear oven at 100°C, had an intrinsic viscosity[η]50h of 0.77 dl/g when stored for 50 hours, and had an intrinsic viscosity[η]168h of 0.16 dl/g when stored for 168 hours. The results are shown in Table 2.

<Comparative Example 2: To synthesize heterophasic propylene polymerization material (C2)>

The inside of a stainless steel autoclave (hereinafter, referred to as an "autoclave 1") having an internal volume of 5 L and equipped with a stirrer was dried under reduced pressure. Thereafter, the gas in the autoclave 1 was replaced with argon gas and cooled. The inside of the autoclave 1 was then evacuated.

In a glass charger, heptane, triethylaluminum (aluminum compound) (1.25 mmol), tert-butyl-n-propyldimethoxysilane (0.08 mmol), and the olefin polymerization-use solid catalyst component (1) (13.2 mg) were brought into contact with one another. The resulting contact product was put into the autoclave 1. Further, in a glass charger, pentaerythritol tetrakis[3-(3',5'-di-tert-butyl-4'-hydroxyphenyl)propionate] (an antioxidant represented by formula (1): the structural formula is described below) (0.30 g) was suspended in heptane, and the mixture was injected into the autoclave 1. Thereafter, liquefied propylene (1170 g) was fed into the autoclave 1, and hydrogen gas (partial pressure: 0.15 MPa) was then supplied. After that, the temperature in the autoclave 1 was raised to 50°C to start polymerization. At 60 minutes after the start of polymerization, the unreacted gas was purged to the outside of the polymerization system. The intrinsic viscosity [η]I of the propylene-based polymer (polymer (I)) sampled was 0.89 dL/g.

In a glass charger, heptane and triethylaluminum (aluminum compound) (1.25 mmol) were brought into contact. The resulting contact product was charged into the autoclave 1 having an internal temperature of 40°C, and hydrogen gas (partial pressure: 0.07 MPa) was then supplied. (In Comparative Example 2, no antioxidant was added in the second polymerization step)

After the autoclave 1 and an autoclave (hereinafter, referred to as an "autoclave 2") having an internal volume of 3 L were connected, the inside of the autoclave 2 was evacuated. Thereafter, propylene (370 g) and ethylene (180 g) were fed into the autoclave 2. The internal temperature of the autoclave 2 was raised to 90°C, the obtained mixed gas was continuously fed to the autoclave 1, and polymerization was performed at a polymerization pressure of 1.5 MPa and an internal temperature of 70°C for 40 minutes. After that, the gas in the autoclave 1 was purged to terminate the polymerization. The heterophasic propylene polymerization material thus produced was dried under reduced pressure at 70°C for 1 hour to prepare a heterophasic propylene polymerization material (C2) (362 g).

The resulting heterophasic propylene polymerization material (C2) had a BD of 0.395 g/cm$^3$.

The resulting heterophasic propylene polymerization material (C2) had an intrinsic viscosity [η]whole of 1.55 dl/g. The resulting heterophasic propylene polymerization material (C2) had a polymer (II) content of 48 mass%. In addition, the heterophasic propylene polymerization material (C2) had an ethylene structural unit content of 22 mass%.

<Example 2: To synthesize heterophasic propylene polymerization material (2)>

The inside of a stainless steel autoclave (hereinafter, referred to as an "autoclave 1") having an internal volume of 5 L and equipped with a stirrer was dried under reduced pressure. Thereafter, the gas in the autoclave 1 was replaced with argon gas and cooled. The inside of the autoclave 1 was then evacuated.

In a glass charger, heptane, triethylaluminum (aluminum compound) (0.5 mmol), tert-butyl-n-propyldimethoxysilane (0.15 mmol), and the olefin polymerization-use solid catalyst component (1) (14.8 mg) were brought into contact with one another. The resulting contact product was put into the autoclave 1. Thereafter, liquefied propylene (1300 g) was fed into the autoclave 1, and hydrogen gas (partial pressure: 0.30 MPa) was then supplied. After that, the temperature in the autoclave 1 was raised to 70°C to start polymerization. At 20 minutes after the start of polymerization, the unreacted gas was purged to the outside of the polymerization system. The intrinsic viscosity [η]I of the propylene-based polymer sampled was 1.14 dL/g.

A solution obtained by bringing hexane (9 mL), triethylaluminum (aluminum compound) (3.0 mmol), pentaerythritol tetrakis[3-(3',5'-di-tert-butyl-4'-hydroxyphenyl)propionate] (an antioxidant represented by formula (1): the structural formula is described below) (0.30 g), and tris(2,4-di-tert-butylphenyl)phosphite (corresponding to neither formula (1) nor formula (2); the structural formula is described below) (0.60 g) into contact with one another in a flask was charged into the autoclave 1 having an internal temperature of 40°C. The mixture was brought into contact with the polymer (I) that had already been polymerized in the autoclave 1, and hydrogen gas (partial pressure: 0.07 MPa) was then supplied.

After the autoclave 1 and an autoclave (hereinafter, referred to as an "autoclave 2") having an internal volume of 3 L were connected, the inside of the autoclave 2 was evacuated. Thereafter, propylene (370 g) and ethylene (180 g) were fed into the autoclave 2. The internal temperature of the autoclave 2 was raised to 90°C, the obtained mixed gas was continuously fed to the autoclave 1, and polymerization was performed at a polymerization pressure of 1.5 MPa and an internal temperature of 70°C for 20 minutes. After that, the gas in the autoclave 1 was purged to terminate the polymerization. The heterophasic propylene polymerization material thus produced was dried under reduced pressure at 70°C for 1 hour to prepare a heterophasic propylene polymerization material (2) (726 g).

The resulting heterophasic propylene polymerization material (2) had a BD of 0.451 g/$cm^3$.

The resulting heterophasic propylene polymerization material (2) had an intrinsic viscosity [η]whole of 1.38 dl/g. The resulting heterophasic propylene polymerization material (2) had a polymer (II) content of 16 mass%. In addition, the heterophasic propylene polymerization material (2) had an ethylene structural unit content of 11 mass%.

<Example 3: To synthesize heterophasic propylene polymerization material (3)>

The inside of a stainless steel autoclave (hereinafter, referred to as an "autoclave 1") having an internal volume of 5 L and equipped with a stirrer was dried under reduced pressure. Thereafter, the gas in the autoclave 1 was replaced with argon gas and cooled. The inside of the autoclave 1 was then evacuated.

In a glass charger, heptane, triethylaluminum (aluminum compound) (0.5 mmol), tert-butyl-n-propyldimethoxysilane (0.15 mmol), and the olefin polymerization-use solid catalyst component (1) (17.3 mg) were brought into contact with one another. The resulting contact product was put into the autoclave 1. Thereafter, liquefied propylene (1300 g) was fed into the autoclave 1, and hydrogen gas (partial pressure: 0.30 MPa) was then supplied. After that, the temperature in the autoclave 1 was raised to 70°C to start polymerization. At 20 minutes after the start of polymerization, the unreacted gas was purged to the outside of the polymerization system. The intrinsic viscosity [η]I of the propylene-based polymer sampled was 1.10 dL/g.

In a glass charger, heptane, triethylaluminum (aluminum compound) (1.5 mmol), octadecyl 3-(3,5-di-tert-butyl-4-hydroxyphenyl)propionate (an antioxidant represented by formula (1): the structural formula is described below) (0.60 g), and tris(2,4-di-tert-butylphenyl)phosphite (corresponding to neither formula (1) nor formula (2); the structural formula is described below) (0.60 g) were brought into contact with one another. The obtained contact product was charged into the autoclave 1 at an internal temperature of 40°C, and brought into contact with the polymer (I) that had already been polymerized in the autoclave 1, and hydrogen gas (partial pressure: 0.07 MPa) was then supplied.

After the autoclave 1 and an autoclave (hereinafter, referred to as an "autoclave 2") having an internal volume of 3 L were connected, the inside of the autoclave 2 was evacuated. Thereafter, propylene (370 g) and ethylene (180 g) were fed into the autoclave 2. The internal temperature of the autoclave 2 was raised to 90°C, the obtained mixed gas was continuously fed to the autoclave 1, and polymerization was performed at a polymerization pressure of 1.5 MPa and an internal temperature of 70°C for 35 minutes. After that, the gas in the autoclave 1 was purged to terminate the polymerization. The heterophasic propylene polymerization material thus produced was dried under reduced pressure at 70°C for 1 hour to prepare a heterophasic propylene polymerization material (3) (736 g).

The resulting heterophasic propylene polymerization material (3) had a BD of 0.447 g/$cm^3$.

The resulting heterophasic propylene polymerization material (3) had an intrinsic viscosity [η]whole of 1.45 dl/g. The resulting heterophasic propylene polymerization material (3) had a polymer (II) content of 18 mass%. In addition,

the heterophasic propylene polymerization material (3) had an ethylene structural unit content of 11 mass%.

<Example 4: To synthesize heterophasic propylene polymerization material (4)>

The inside of a stainless steel autoclave (hereinafter, referred to as an "autoclave 1") having an internal volume of 5 L and equipped with a stirrer was dried under reduced pressure. Thereafter, the gas in the autoclave 1 was replaced with argon gas and cooled. The inside of the autoclave 1 was then evacuated.

In a glass charger, heptane, triethylaluminum (aluminum compound) (1.25 mmol), tert-butyl-n-propyldimethoxysilane (0.08 mmol), and the olefin polymerization-use solid catalyst component (1) (15.1 mg) were brought into contact with one another. The resulting contact product was put into the autoclave 1. Thereafter, liquefied propylene (1170 g) was fed into the autoclave 1, and hydrogen gas (partial pressure: 0.15 MPa) was then supplied. After that, the temperature in the autoclave 1 was raised to 50°C to start polymerization. At 60 minutes after the start of polymerization, the unreacted gas was purged to the outside of the polymerization system. The intrinsic viscosity [η]I of the propylene-based polymer sampled was 0.86 dL/g.

In a glass charger, heptane, triethylaluminum (aluminum compound) (1.25 mmol), and 6-[3-[3-(3-*tert*-butyl-4-hydroxy-5-methylphenyl)propoxy]-2,4,8,10-tetra-tert-butyldibenzi[d,f][1,3,2]dioxaphosphepine (an antioxidant represented by formula (2); the structural formula is described below) (0.67 g) were brought into contact. The obtained contact product was charged into the autoclave 1 at an internal temperature of 40°C, and brought into contact with the polymer (I) that had already been polymerized in the autoclave 1, and hydrogen gas (partial pressure: 0.07 MPa) was then supplied.

After the autoclave 1 and an autoclave (hereinafter, referred to as an "autoclave 2") having an internal volume of 3 L were connected, the inside of the autoclave 2 was evacuated. Thereafter, propylene (370 g) and ethylene (180 g) were fed into the autoclave 2. The internal temperature of the autoclave 2 was raised to 90°C, the obtained mixed gas was continuously fed to the autoclave 1, and polymerization was performed at a polymerization pressure of 1.5 MPa and an internal temperature of 70°C for 25 minutes. After that, the gas in the autoclave 1 was purged to terminate the polymerization. The heterophasic propylene polymerization material thus produced was dried under reduced pressure at 70°C for 1 hour to prepare a heterophasic propylene polymerization material (4) (470 g).

The resulting heterophasic propylene polymerization material (4) had a BD of 0.448 g/cm$^3$.

The resulting heterophasic propylene polymerization material (4) had an intrinsic viscosity [η]whole of 1.42 dl/g. The resulting heterophasic propylene polymerization material (4) had a polymer (II) content of 43 mass%. In addition, the heterophasic propylene polymerization material (4) had an ethylene structural unit content of 19 mass%.

Table 1 below shows the results obtained in the above Examples and Comparative Examples. Examples 1 to 4, in which the contact product was added before the start of the second polymerization step (i.e., in the second polymerization step) each had a bulk density BD of about 0.44 g/cm$^3$ or higher, which was advantageously high. By contrast, Comparative Example 1, in which the antioxidant (i.e., the contact product) was not added, and Comparative Example 2, in which the antioxidant was added only before the start of the first polymerization step (i.e., no contact product was added in the second polymerization step) each had a low bulk density BD of 0.415 g/cm$^3$ or less.

[Table 1]

| | Antioxidant | Timing of adding contact product | Degree (kg/g-cat) of olefin polymerization when contact product was added | Polymerization activity index Time (min) when monomer consumption was completed | [$\eta$]I (dL/g) | [$\eta$] whole (dL/g) | [$\eta$]II (dL/g) | Ethylene structural unit content (mass%) of heterophasic propylene polymerization material | Polymer (II) content (mass%) of heterophasic propylene polymerization material | BD (g/cm$^3$) |
|---|---|---|---|---|---|---|---|---|---|---|
| Example 1 | Irganox 1010 | Before start of second polymerization step | 13 | 35 | 0.78 | 1.57 | 2.21 | 23 | 55 | 0.458 |
| Comparative Example 1 | - | No addition | - | 25 | 0.82 | 1.38 | 1.97 | 20 | 49 | 0.415 |
| Comparative Example 2 | Irganox 1010 | Before start of first polymerization step | 0 | 40 | 0.89 | 1.55 | 2.28 | 22 | 48 | 0.395 |
| Example 2 | ·Irganox 1010<br>·Irgafos 168 | Before start of second polymerization step | 46 | 20 | 1.14 | 1.38 | 2.62 | 11 | 16 | 0.451 |
| Example 3 | ·Irganox 1076<br>·Irgafos 168 | Before start of second polymerization step | 46 | 20 | 1.10 | 1.45 | 3.03 | 11 | 18 | 0.447 |
| Example 4 | Sumilizer-GP | Before start of second polymerization step | 21 | 25 | 0.86 | 1.42 | 2.17 | 19 | 43 | 0.448 |

<Supplementary explanation of Table 1>

(1)Irganox1010

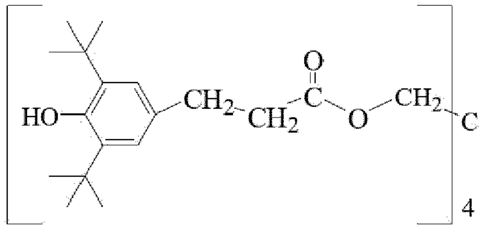

- Pentaerythritol tetrakis[3-(3',5'-di-tert-butyl-4'-hydroxyphenyl)propionate]
- Phenolic antioxidant

(2)Irgafos168

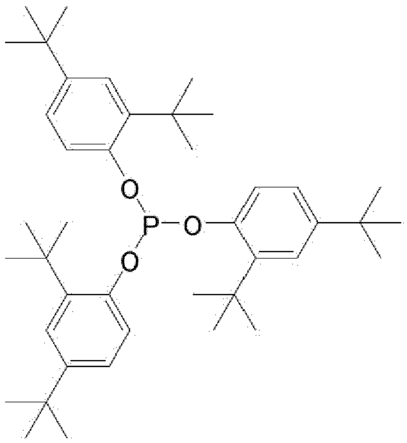

- Tris(2,4-di-tert-butylphenyl)phosphite
- Phosphite-based antioxidant

(3)Irganox1076

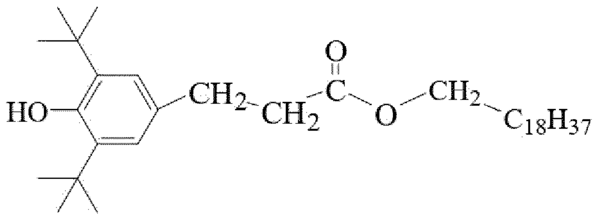

- Octadecyl 3-(3,5-di-tert-butyl-4-hydroxyphenyl)propionate
- Phenolic antioxidant

(4) Sumilizer-GP

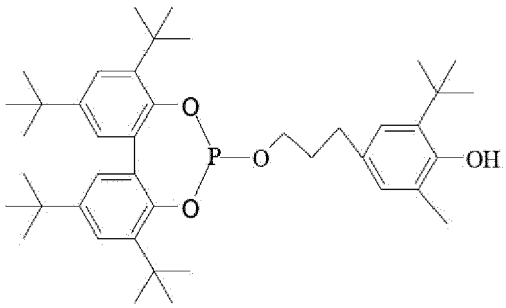

- 6-[3-[3-(3-tert-Butyl-4-hydroxy-5-methylphenyl)propoxy]-2,4,8,10-tetra-tert-butyl dibenzi[d,f][1,3,2]dioxaphosphepine
- Phenol phosphite-based antioxidant

[Table 2]

| Table 2 | [η]whole (dL/g) after heating at 100°C | | | |
|---|---|---|---|---|
| Heating time -> | 0 h | 24 h | 50 h | 168 h |
| Example 1 | 1.57 | 1.53 | 1.54 | 1.47 |
| Comparative Example 1 | 1.38 | 1.31 | 0.77 | 0.16 |

As shown in Table 2, in Example 1, the decrease in the intrinsic viscosity [η]whole when stored for 168 hours was 0.10 dL/g (= 1.57 - 1.47), which was advantageously low. By contrast, in Comparative Example 1, the decrease in the intrinsic viscosity [η]whole when stored for 168 hours was as high as 1.22 dL/g (= 1.38 - 0.16). As described above, in Examples, not only an advantageously high bulk density BD but also an advantageously low viscosity decrease (i.e., high storage stability) during long-term storage were achieved.

The inside of a storage container made of a material designated in Table 3 was replaced with nitrogen gas. Next, an antioxidant, hexane, and a hexane solution containing an aluminum compound (1 mol/L) were added, at a ratio shown in Table 3, to the storage container, and the mixture was then stirred for 5 minutes. Subsequently, the mixture was allowed to stand at a storage pressure (gauge pressure and pressurization with argon) shown in Table 3 at 15 to 25°C for a storing time, and the presence or absence of precipitation was then visually checked. It is presumed that the precipitation is generated due to insolubilization by a reaction and oxygen crosslinking between a hydroxy group in the antioxidant and an alkyl group of the aluminum compound to increase the molecular weight or form a network structure. The present invention exerts an effect of effectively suppressing the reaction. Figs. 1 to 3 are each a photograph showing how the inside of the storage container looked in Reference Example 6, 7, or 9, respectively. No precipitation was found in any of the Reference Examples.

[Table 3]

Table 3

| | Storage container | Antioxidant | | Hexane (mL) | $ALR_3$ hexane solution (mL) | R of $ALR_3$ | Storage pressure (MPa) | Storing time | Precipitation |
|---|---|---|---|---|---|---|---|---|---|
| Reference Example 5 | Glass-made | ·Irganox 1010<br>·Irgafos 168 | ·0.3 g<br>-0.6 g | 6 | 3 | Et | 0 | 1 day | None |
| Reference Example 6 | Glass-made | ·Irganox 1010<br>·Irgafos 168 | ·0.3 g<br>-0.6 g | 9 | 3 | Et | 0 | 7 days | None |
| Reference Example 7 | Glass-made | ·Irganox 1010<br>·Irgafos 168 | ·0.3 g<br>-0.6 g | 9 | 3 | Et | 0.4 | 7 days | None |
| Reference Example 8 | Glass-made | ·Irganox 1010<br>·Irgafos 168 | -0.6 g<br>·1.2 g | 18 | 6 | i-Bu | < 0.1 | 7 days | None |
| Reference Example 9 | Polyethylene-made | ·Irganox 1010<br>·Irgafos 168 | ·0.3 g<br>-0.6 g | 9 | 3 | Et | 0 | 2 days | None |

The present invention exerts an effect such that a powdery heterophasic propylene polymerization material or olefin polymer having higher thermal stability or higher bulk density can be obtained, and can be used for continuous polymer production in a large-scale factory; or transport efficiency is superior when the powdery heterophasic propylene polymerization material or olefin polymer is shipped as it is without being pelletized. Therefore, the heterophasic propylene polymerization material or olefin polymer is suitably used for applications such as various automobile interior and exterior parts (e.g., an instrument panel containing an injection molding material, a glove box, a trim material, a housing material, a pillar, a bumper, a fender, a rear door) as well as various parts of home appliances, various housing equipment parts, various industrial parts, and/or various building material parts. The present invention is thus highly applicable to various fields of industries such as transport machine industry, electrical and electronic industriess, and building and construction industries.

## Claims

**1.** A method for producing a heterophasic propylene polymerization material, comprising:

a first polymerization step of forming a polymer (I) by polymerizing propylene in presence of a contact product below and an olefin polymerization catalyst obtained by bringing an aluminum compound into contact with an olefin polymerization-use solid catalyst component containing a titanium atom, a magnesium atom, a halogen atom, and an internal electron donor; and
a second polymerization step of forming a polymer (II) by copolymerizing propylene with at least one kind selected from the group consisting of ethylene and $C_{4-12}$ $\alpha$-olefins in presence of the polymer (I),
the contact product obtained by bringing an aluminum compound into contact with an antioxidant represented by the following formula (1) or formula (2):

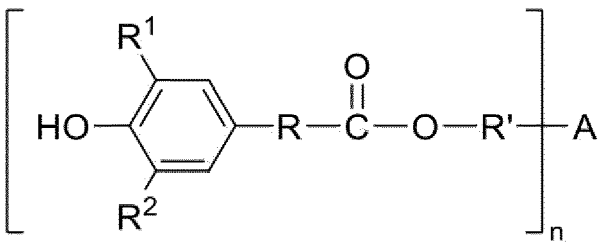

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

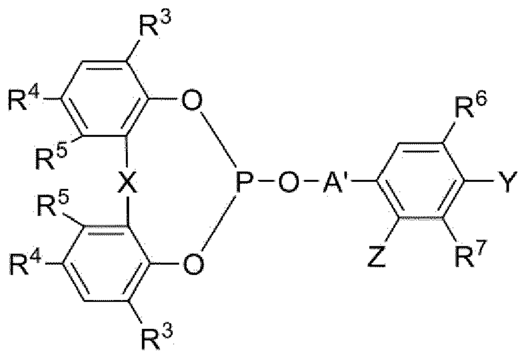

(2)

wherein:

$R^3$, $R^4$, $R^6$, and $R^7$ each independently represent a hydrogen atom, a $C_{1-8}$ alkyl group, a $C_{5-8}$ cycloalkyl

group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

**2.** The method for producing a heterophasic propylene polymerization material according to claim 1, wherein the contact product is present in a gas-phase polymerization step in the first polymerization step.

**3.** A method for producing an olefin polymer, comprising the step of:

forming an olefin polymer by continuously polymerizing at least one kind selected from the group consisting of ethylene, propylene, and $C_{4-12}$ $\alpha$-olefins
in presence of an olefin polymer ($\alpha$) below:

the olefin polymer ($\alpha$): an olefin polymer formed by polymerizing an olefin in presence of a contact product below and an olefin polymerization catalyst obtained by bringing an olefin polymerization-use solid catalyst component into contact with an aluminum compound, and obtained by polymerizing 10 kg or more and 60 kg or less of the olefin based on 1 g of the olefin polymerization-use solid catalyst component.
the contact product obtained by bringing an aluminum compound into contact with an antioxidant represented by the following formula (1) or formula (2):

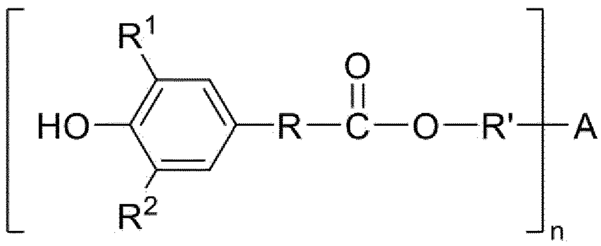

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

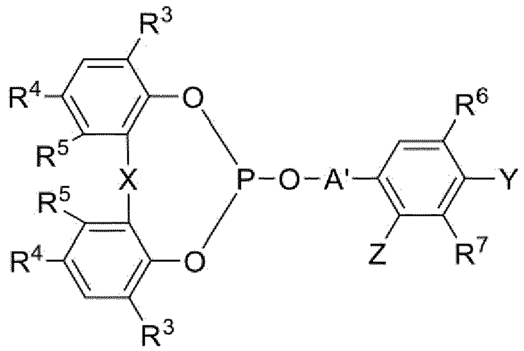

(2)

wherein:

$R^3$, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ repre-

sents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

**4.** The method for producing an olefin polymer according to claim 3, wherein an amount of the antioxidant represented by formula (1) or formula (2) in the contact product is from 0.0001 to 1 part by weight based on 100 parts by weight of the olefin polymer ($\alpha$).

**5.** The method for producing a heterophasic propylene polymerization material according to claim 1 or 2, wherein the heterophasic propylene polymerization material comprises:

the polymer (I) containing 80 mass% or more of a propylene-derived structural unit and having an intrinsic viscosity of 2.0 dL/g or less; and
the polymer (II) containing a propylene-derived structural unit and a structural unit derived from at least one compound selected from the group consisting of ethylene and $C_{4-12}$ $\alpha$-olefins and having an intrinsic viscosity of from 1.5 to 8.0 dL/g.

**6.** The method for producing a heterophasic propylene polymerization material according to claim 1 or 2, wherein the polymer (I) has a weight ratio of from 40 to 90 mass%, and the polymer (II) has a weight ratio of from 10 to 60 mass%.

**7.** A method for producing a heterophasic propylene polymerization material, comprising:

a first polymerization step of forming a polymer (I) by polymerizing propylene in presence of an olefin polymerization catalyst obtained by bringing an aluminum compound into contact with an olefin polymerization-use solid catalyst component containing a titanium atom, a magnesium atom, a halogen atom, and an internal electron donor; and
a second polymerization step of forming a polymer (II) by copolymerizing propylene with at least one kind selected from the group consisting of ethylene and $C_{4-12}$ $\alpha$-olefins in presence of the polymer (I) and a contact product below,
the contact product obtained by bringing an aluminum compound into contact with an antioxidant represented by the following formula (1) or formula (2):

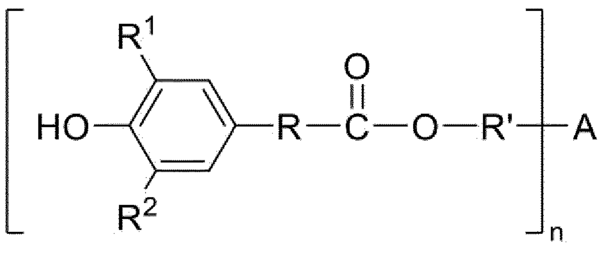
(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

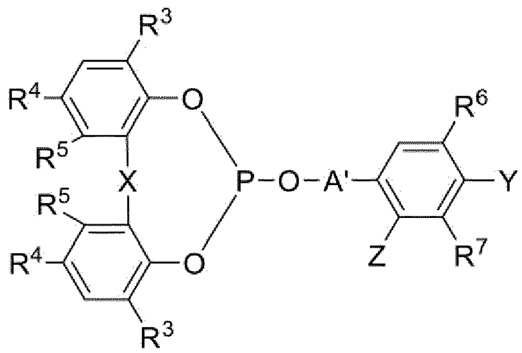

(2)

wherein:

$R^3$, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

**8.** The method for producing a heterophasic propylene polymerization material according to claim 7, wherein the copolymerization is performed after the contact product and the polymer (I) are brought into contact with each other in the second polymerization step.

**9.** A method for producing an olefin polymer, comprising the step of:

forming an olefin polymer by continuously polymerizing at least one kind selected from the group consisting of ethylene, propylene, and $C_{4-12}$ $\alpha$-olefins
in presence of an olefin polymer ($\alpha$) below and a contact product below:

the olefin polymer ($\alpha$) obtained by polymerizing 10 kg or more and 60 kg or less of olefin per g of an olefin polymerization-use solid catalyst component.
the contact product obtained by bringing an aluminum compound into contact with an antioxidant represented by the following formula (1) or formula (2):

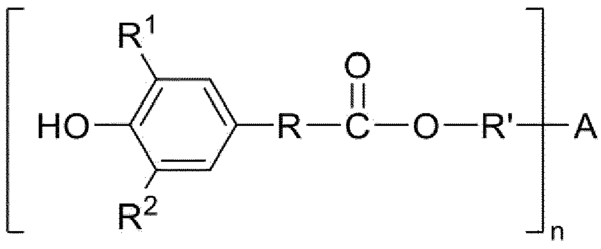

(1)

wherein:

n represents an integer of 1 to 4,
$R^1$ and $R^2$ each independently represent a $C_{1-20}$ hydrocarbyl group or a hydrogen atom,
R and R' each represent a $C_{1-20}$ hydrocarbylene group, and
A represents a $C_{1-30}$ n-valent hydrocarbon group; or

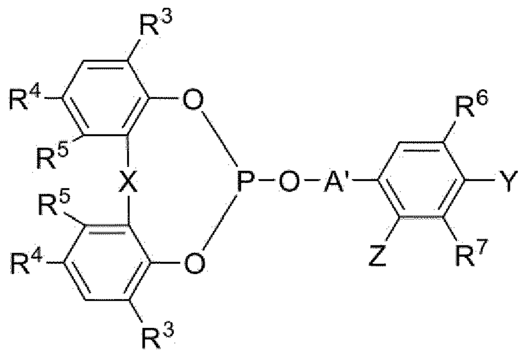

(2)

wherein:

$R^3$, $R^4$, $R^6$, and $R^7$ each independently represent a hydrogen atom, a $C_{1-8}$ alkyl group, a $C_{5-8}$ cycloalkyl group, a $C_{6-12}$ alkylcycloalkyl group, a $C_{7-12}$ aralkyl group, or a phenyl group, $R^5$ represents a hydrogen atom or a $C_{1-8}$ alkyl group,
X represents a single bond, a sulfur atom, or a - $CHR^8$- group where $R^8$ represents a hydrogen atom, a $C_{1-8}$ alkyl group, or a $C_{5-8}$ cycloalkyl group,
A' represents a $C_{2-8}$ hydrocarbylene group, and
either one of Y or Z represents a hydroxyl group and the other represents a hydrogen atom or a $C_{1-8}$ alkyl group.

**10.** The method for producing an olefin polymer according to claim 9, wherein an amount of the antioxidant represented by formula (1) or formula (2) in the contact product is from 0.0001 to 1 part by weight based on 100 parts by weight of the olefin polymer ($\alpha$).

**11.** The method for producing a heterophasic propylene polymerization material according to claim 7 or 8, wherein the heterophasic propylene polymerization material comprises:

the polymer (I) containing 80 mass% or more of a propylene-derived structural unit and having an intrinsic viscosity of 2.0 dL/g or less; and
the polymer (II) containing a propylene-derived structural unit and a structural unit derived from at least one compound selected from the group consisting of ethylene and $C_{4-12}$ $\alpha$-olefins and having an intrinsic viscosity of from 1.5 to 8.0 dL/g.

**12.** The method for producing a heterophasic propylene polymerization material according to claim 7 or 8, wherein the polymer (I) has a weight ratio of from 40 to 90 mass%, and the polymer (II) has a weight ratio of from 10 to 60 mass%.

FIG. 1

REFERENCE EXAMPLE 6

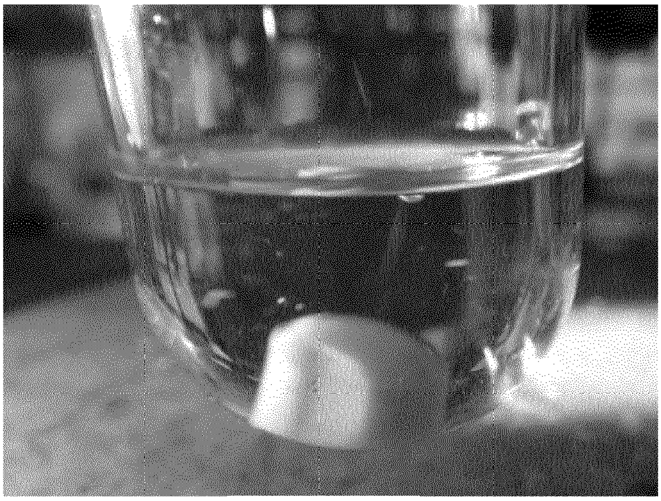

FIG. 1

FIG. 2

REFERENCE EXAMPLE 7

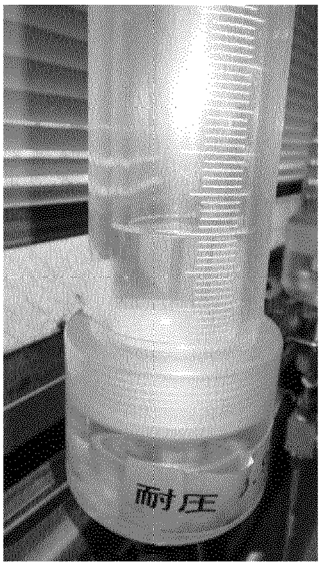


FIG. 2

FIG. 3

REFERENCE EXAMPLE 9

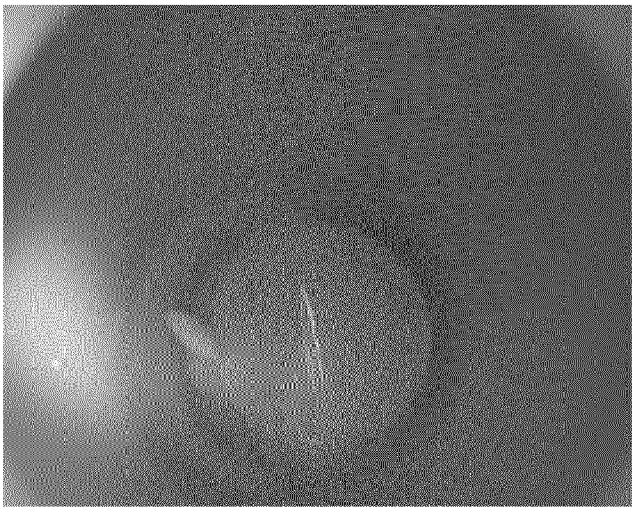

FIG. 3

FIG. 4

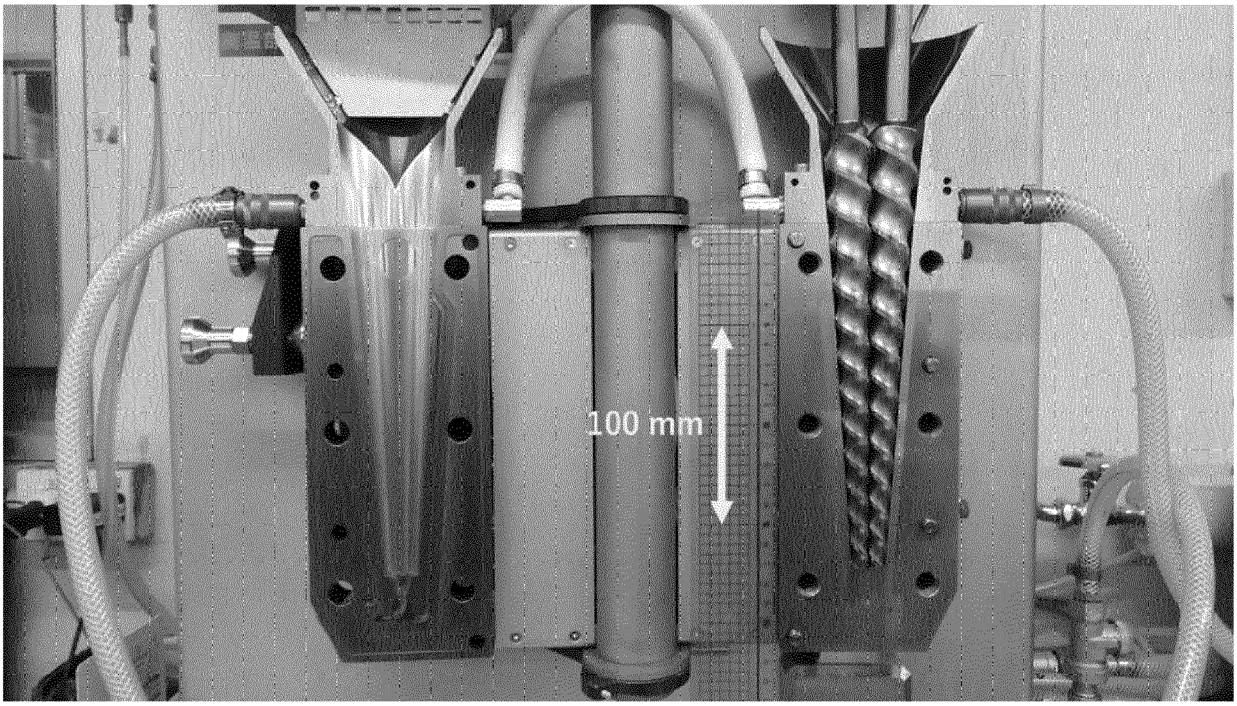


FIG. 4

FIG. 5

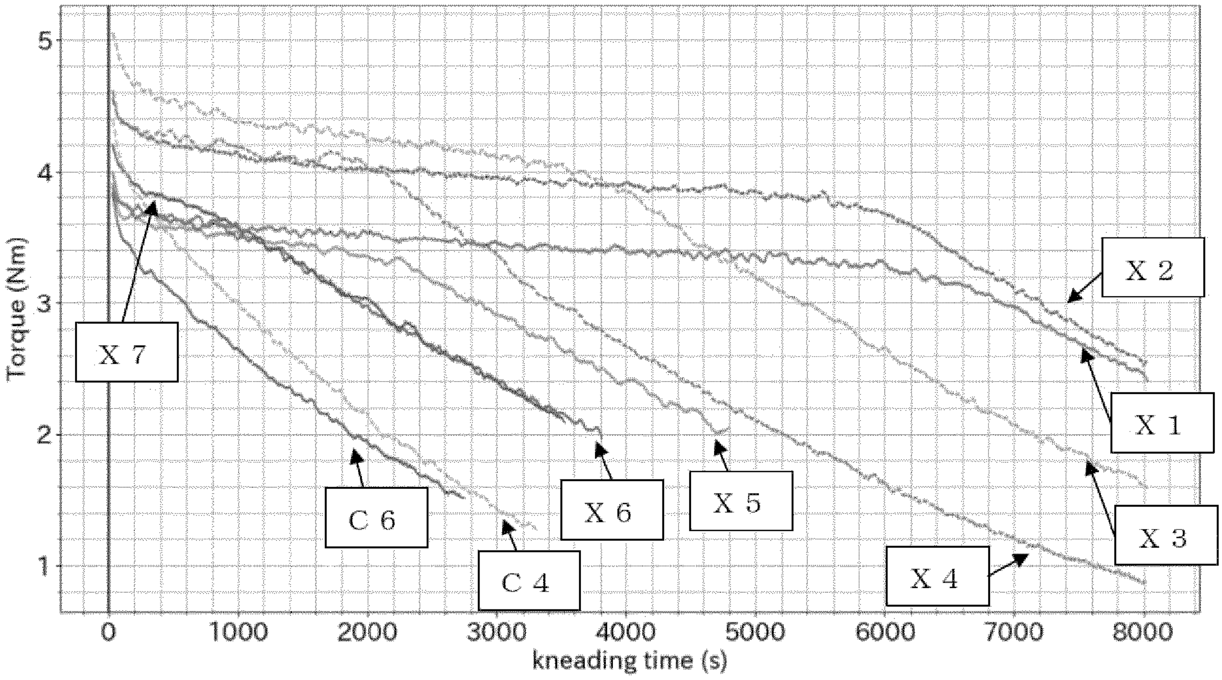
5
4
3
2
1
Torque (Nm)
0
1000
2000
3000
4000
5000
6000
7000
8000
kneading time (s)
X 7
X 2
X 1
X 3
X 4
X 5
X 6
C 6
C 4

FIG. 5

Europäisches Patentamt
European Patent Office
Office européen des brevets

# EUROPEAN SEARCH REPORT

Application Number
EP 24 15 5375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 578 606 B1 (BOREALIS AG [AT]) 17 February 2016 (2016-02-17) * paragraph [0001] * * paragraph [0077] - paragraph [0079] * * paragraph [0084] * | 1-12 | INV. C08F210/06 C08F4/649 C08F2/44 |
| X | EP 0 351 360 B1 (CIBA GEIGY AG [CH]) 22 February 1995 (1995-02-22) * page 16 lines 45 to 55 * * page 18, lines 8-12 * * inventive examples 3,4 * | 1-7,9-12 | |
| X | DE 37 82 903 T2 (SOLVAY [BE]) 19 May 1993 (1993-05-19) * page 24 * * page 20, lines 13-20 * * page 19, last paragraph * | 1-12 | |
| X | RANJI ALI ET AL: "Effects of chemical structure of phenolic antioxidants on Ziegler-Natta catalyst performance during propylene polymerization", IRANIAN POLYMER JOURNAL, vol. 23, no. 11, 27 September 2014 (2014-09-27), pages 847-854, XP093177746, IR ISSN: 1026-1265, DOI: 10.1007/s13726-014-0279-y Retrieved from the Internet: URL:http://link.springer.com/article/10.1007/s13726-014-0279-y/fulltext.html> * examples * * figure 2 * | 1-12 | TECHNICAL FIELDS SEARCHED (IPC) C08F |

The present search report has been drawn up for all claims

1

| Place of search | Date of completion of the search | Examiner |
|---|---|---|
| Munich | 24 June 2024 | Thomas, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 15 5375

This annex lists the patent family members relating to the patent documents cited in the above-mentioned European search report. The members are as contained in the European Patent Office EDP file on
The European Patent Office is in no way liable for these particulars which are merely given for the purpose of information.

24-06-2024

| Patent document cited in search report | Publication date | Patent family member(s) | Publication date |
|---|---|---|---|
| EP 2578606 B1 | 17-02-2016 | AU 2012320924 A1 | 22-05-2014 |
| | | CN 103827149 A | 28-05-2014 |
| | | EP 2578606 A1 | 10-04-2013 |
| | | JP 5841667 B2 | 13-01-2016 |
| | | JP 2014528497 A | 27-10-2014 |
| | | KR 20140058680 A | 14-05-2014 |
| | | WO 2013050087 A1 | 11-04-2013 |
| EP 0351360 B1 | 22-02-1995 | AR 243543 A1 | 31-08-1993 |
| | | AT E118790 T1 | 15-03-1995 |
| | | AU 618102 B2 | 12-12-1991 |
| | | BR 8903193 A | 13-02-1990 |
| | | CA 1335916 C | 13-06-1995 |
| | | CN 1039606 A | 14-02-1990 |
| | | CZ 282243 B6 | 11-06-1997 |
| | | DD 297831 A5 | 23-01-1992 |
| | | EP 0351360 A1 | 17-01-1990 |
| | | ES 2068910 T3 | 01-05-1995 |
| | | JP 2781993 B2 | 30-07-1998 |
| | | JP H0253804 A | 22-02-1990 |
| | | KR 910000882 A | 30-01-1991 |
| | | MX 169510 B | 08-07-1993 |
| | | US 5045577 A | 03-09-1991 |
| | | ZA 894937 B | 25-04-1990 |
| DE 3782903 T2 | 19-05-1993 | AR 246277 A1 | 29-07-1994 |
| | | AT E82986 T1 | 15-12-1992 |
| | | AU 601769 B2 | 20-09-1990 |
| | | BG 60622 B1 | 31-10-1995 |
| | | BR 8704955 A | 17-05-1988 |
| | | CA 1327965 C | 22-03-1994 |
| | | CN 87107090 A | 27-04-1988 |
| | | CZ 280899 B6 | 15-05-1996 |
| | | CZ 280927 B6 | 15-05-1996 |
| | | DE 3782903 T2 | 19-05-1993 |
| | | DK 505187 A | 27-03-1988 |
| | | EP 0261727 A1 | 30-03-1988 |
| | | ES 2052548 T3 | 16-07-1994 |
| | | FI 874210 A | 27-03-1988 |
| | | FR 2604439 A1 | 01-04-1988 |
| | | GR 3006472 T3 | 21-06-1993 |
| | | HK 48893 A | 27-05-1993 |
| | | HR P920970 A2 | 31-10-1994 |
| | | HR P920976 A2 | 28-02-1995 |
| | | HU 202562 B | 29-04-1991 |
| | | IE 63110 B1 | 22-03-1995 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 15 5375

This annex lists the patent family members relating to the patent documents cited in the above-mentioned European search report. The members are as contained in the European Patent Office EDP file on
The European Patent Office is in no way liable for these particulars which are merely given for the purpose of information.

24-06-2024

| Patent document cited in search report | Publication date | Patent family member(s) | Publication date |
|---|---|---|---|
| | | IN 172196 B | 01-05-1993 |
| | | JP 2625126 B2 | 02-07-1997 |
| | | JP S63146906 A | 18-06-1988 |
| | | KR 890005153 A | 13-05-1989 |
| | | NO 171070 B | 12-10-1992 |
| | | PH 27151 A | 02-04-1993 |
| | | PL 152519 B1 | 31-01-1991 |
| | | PL 267910 A1 | 18-08-1988 |
| | | PT 85751 A | 01-10-1987 |
| | | RO 103447 B1 | 13-06-1992 |
| | | SI 8711789 A8 | 31-08-1996 |
| | | SI 8811759 A8 | 31-12-1996 |
| | | SK 509890 A3 | 03-06-1998 |
| | | SK 686587 A3 | 10-12-1997 |
| | | SU 1674687 A3 | 30-08-1991 |
| | | TR 25127 A | 01-10-1992 |
| | | YU 175988 A | 31-12-1989 |
| | | YU 178987 A | 31-12-1988 |
| | | ZA 876968 B | 21-03-1988 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010168546 A
- JP 2010511634 A
- JP 2011506628 A
- JP 2013503647 A
- WO 2007055361 A
- JP 2017512246 A
- JP 2018522087 A
- JP 2019167424 A
- WO 2021006245 A
- US 6825146 B
- WO 1998044009 A
- WO 2003000754 A
- WO 2003000757 A
- WO 2003085006 A
- JP 4368391 A
- JP 3074341 A
- JP 8073388 A
- WO 2013058193 A
- JP 2011246699 A
- JP H10A212319 B
- JP 2950168 B
- JP 2006096936 A
- JP 2009173870 A
- JP 2010168545 A
- WO 2006129773 A
- JP 4193223 B


### Non-patent literature cited in the description


- **A. ZAMBELLI.** *Macromolecules,* 1973, vol. 6, 925
- *Macromolecules,* 1975, vol. 8, 687
- Polymer Solution, Polymer Experimentation 11. KYORITSU SHUPPAN CO., LTD, 1982, 491
- Polymer Analysis Handbook. KINOKUNIYA COMPANY LTD, 1995, 619
- Polymer Analysis Handbook. KINOKUNIYA COMPANY LTD, vol. 1995, 619